# EUROPEAN PATENT APPLICATION

(11) **EP 4 625 592 A1**
(43) Date of publication of application: **01.10.2025**
(21) Application number: 23943167.9
(22) Date of filing: 05.09.2023
(51) Int. Cl.: H01M 10/058, H01M 10/0525, H01M 10/04, H01M 50/503, H01M 50/528

(54) **BATTERY CELL, BATTERY, AND ELECTRIC DEVICE**

(30) Priority: 26.06.2023 CN 202310755549
(71) Applicant: Contemporary Amperex Technology Co., Limited, Ningde, Fujian 352100 (CN)
(72) Inventor: WU, Kai, Ningde, Fujian 352100 (CN); LIN, Junyi, Ningde, Fujian 352100 (CN); GUO, Zhijun, Ningde, Fujian 352100 (CN); LEI, Yuyong, Ningde, Fujian 352100 (CN); CHEN, Shengwang, Ningde, Fujian 352100 (CN)
(74) Representative: Laufhütte, Dieter
(86) International application number: PCT/CN2023/117072
(87) International publication number: WO 2025/000688

(57) **Abstract**

The present application provides a battery cell, a battery, and an electric device, and belongs to the technical field of batteries. The battery cell includes a housing assembly, an electrode assembly, and a first current collecting member. The housing assembly includes a first electrode lead-out portion that inputs or outputs electric energy. The electrode assembly and the first current collecting member each are accommodated in the housing assembly, the first current collecting member is located at one end of the electrode assembly along a first direction, and the first current collecting member electrically connects the first electrode lead-out portion and the electrode assembly. The first current collecting member is provided with a through hole that penetrates the first current collecting member along the first direction, a first corner is formed on a hole wall surface of the through hole along an orthogonal projection along the first direction, and a part of the through hole along the orthogonal projection along the first direction is located within the first corner. An acting force acting on the first current collecting member during pressure relief of the battery cell can concentrate stress at the first corner to tear the first current collecting member, such that an area of the first current collecting member through which a thermal runaway gas passes can be enlarged to improve the exhaust efficiency of the battery cell.

## Description

### CROSS-REFERENCE TO RELATED APPLICATIONS

The present application claims priority to Chinese Patent Application No. 2023107555490 entitled "Battery Cell, Battery, and Electric Device" filed on June 26, 2023, which is incorporated herein by reference in its entirety.

### TECHNICAL FIELD

The present application relates to the technical field of batteries, and in particular, to a battery cell, a battery, and an electric device.

### BACKGROUND

In recent years, new energy vehicles have been remarkably developed, and in the field of electric vehicles, power batteries play an unreplaceable important role as a power source for electric vehicles. With the vigorous spread of new energy vehicles, there is an increasing demand for power battery products, and the batteries as internal components of the new energy vehicles have a higher demand in terms of use reliability. A battery cell generally includes a housing and an electrode assembly accommodated in the housing. However, the existing battery cell often has a risk of fire and explosion or the like during use, resulting in low use reliability of the battery cell.

### SUMMARY

Embodiments of the present application provide a battery cell, a battery, and an electric device, and the use reliability of the battery cell can be effectively improved.

In a first aspect, an embodiment of the present application provides a battery cell, including: a housing assembly, an electrode assembly, and a first current collecting member, where the housing assembly includes a first electrode lead-out portion for inputting or outputting electric energy; the electrode assembly is accommodated in the housing assembly; and the first current collecting member is accommodated in the housing assembly, the first current collecting member is located at one end of the electrode assembly along a first direction and the first current collecting member electrically connects the first electrode lead-out portion and the electrode assembly, and where the first current collecting member is provided with a through hole that penetrates the first current collecting member along the first direction, a first corner is formed on a hole wall surface of the through hole along an orthogonal projection along the first direction, and a part of the through hole along the orthogonal projection along the first direction is located within the first corner.

In the above technical solution, the through hole penetrating both sides of the first current collecting member along the first direction is formed in the first current collecting member, the first corner is formed on the hole wall surface of the through hole along the orthogonal projection along the first direction, and the part of the through hole along the orthogonal projection along the first direction is located within the first corner, such that the first corner formed on the hole wall surface of the through hole is an outward protruding corner structure away from the through hole, the acting force acted on the first current collecting member can concentrate stress at the first corner on the hole wall surface of the through hole when the battery cell is in a thermal runaway and relieves an internal gas, and the first current collecting member is torn from the first corner on the hole wall surface of the through hole, such that an area of the region through which the thermal runaway gas passes can be increased to reduce blockage of the first current collecting member on the thermal runaway gas inside the battery cell, to further effectively improve the exhaust smoothness and the exhaust efficiency of the battery cell, so as to reduce the risk such as fire and explosion due to a poor pressure relief effect of the battery cell, which is beneficial to improving the use reliability of the battery cell.

In some embodiments, an angle β of the first corner facing a side of the through hole satisfies 0°<β≤90°.

In the above technical solution, the angle of the first corner facing the side of the through hole is set to be greater than 0 degrees and less than or equal to 90 degrees, such that a phenomenon in which it is difficult for the thermal runaway gas to tear the first current collecting member from the first corner due to an excessively large angle of the first corner can be effectively alleviated while the first corner is the corner structure protruding outward away from the through hole, which is further beneficial to improving the tearing effect of the thermal runaway gas on the first current collecting member after stress concentration at the first corner.

In some embodiments, an angle β of the first corner facing a side of the through hole satisfies 30°<β≤90°.

In the above technical solution, by setting the angle of the first corner facing a side of the through hole to 30 to 90 degrees, it is possible to alleviate a phenomenon in which the processing difficulty of the through hole becomes excessive due to an excessively small angle of the first corner, so as to reduce the manufacturing difficulty and the manufacturing cost of the first current collecting member.

In some embodiments, a plurality of first corners are formed on the hole wall surface of the through hole, and the plurality of first corners are sequentially arranged in a circumferential direction of the through hole.

In the above technical solution, the plurality of first corners are formed on the hole wall surface of the through hole, and the plurality of first corners are sequentially arranged along the circumferential direction of the through hole, such that the thermal runaway gas can tear the first current collecting member from the plurality of first corners after gas concentration at the plurality of first corners on the hole wall surface of the through hole, and the first current collecting member can be torn from a plurality of positions, which is beneficial to further expanding the area of the region of the first current collecting member in which the thermal runaway gas passes, so as to further reduce blockage of the first current collecting member on the thermal runaway gas inside the battery cell, thereby effectively improving the exhaust smoothness and the exhaust efficiency of the battery cell.

In some embodiments, the hole wall surface of the through hole includes a plurality of first wall surfaces along the circumferential direction of the through hole, and the first corner is formed between every two adjacent first wall surfaces.

In the above technical solution, by arranging the hole wall surface of the through hole as a plurality of first wall surfaces arranged along the circumferential direction of the through hole and forming the first corner between every two adjacent first wall surfaces, the orthogonal projection of the through hole along the first direction is of a polygonal structure, such that a plurality of first corners arranged sequentially along the circumferential direction of the through hole are formed on the hole wall surface of the through hole. The structure is simple and convenient to implement.

In some embodiments, angles of the plurality of first angles are all the same.

In the above technical solution, the angles of the plurality of first corners are set to be the same, such that included angles between two adjacent first wall surfaces of the plurality of first wall surfaces of the hole wall surface of the through hole are all the same, and thus, the orthogonal projection of the through hole along the first direction is of a regular polygonal structure. Therefore, on the one hand, it is convenient to manufacture and process the through hole, which is beneficial to reducing the manufacturing difficulty of the first current collecting member. On the other hand, the acting forces by which the first current collecting member is torn from the plurality of first corners are all the same, such that the thermal runaway gas tears the first current collecting member from the plurality of first corners.

In some embodiments, the first current collecting member is of a disk-like structure, and a central axis of the first current collecting member coincides with a central axis of the through hole.

In the above technical solution, the central axis of the first current collecting member and the central axis of the through hole are arranged to coincide with each other, such that the through hole is located at the center position of the first current collecting member, and when the first current collecting member is electrically connected to the electrode assembly and the first electrode lead-out portion, the region of the first current collecting member surrounding the outer side of the through hole may be electrically connected to the electrode assembly and the first electrode lead-out portion, and there is no need to secondarily position the first current collecting member so as to avoid the through hole, thereby reducing the difficulty of assembling the first current collecting member into the housing assembly and improving the assembling efficiency of the battery cell.

In some embodiments, every two adjacent first wall surfaces are connected through a chamfered surface along the circumferential direction of the through hole.

In the above configuration, the two adjacent first wall surfaces are connected through the chamfered surface, which is beneficial to reducing the difficulty of forming the through hole in the first current collecting member, and reducing the requirement on equipment for forming the through hole in the first current collecting member.

In some embodiments, the orthogonal projection of the through hole along the first direction is polygonal.

In the above technical solution, the orthogonal projection of the through hole along the first direction is of the polygonal structure, such that the first corner is formed between every two adjacent edges in the polygon, and the plurality of first break angels sequentially arranged along the circumferential direction of the through hole are formed on the hole wall surface of the through hole. The structure is simple and easy to implement.

In some embodiments, the orthogonal projection of the through hole along the first direction is regular polygonal.

In the above technical solution, the orthogonal projection of the through hole along the first direction is of the regular polygonal structure, such that the angles of the plurality of first corners formed on the hole wall surface of the through hole are all the same. On the one hand, it is convenient to manufacture and process the through hole, which is beneficial to reducing the manufacturing difficulty of the first current collecting member. On the other hand, the acting forces by which the first current collecting member is torn from the plurality of first corners are all the same, such that the thermal runaway gas tears the first current collecting member from the plurality of first corners.

In some embodiments, the orthogonal projection of the through hole along the first direction is triangular or rectangular.

In the above technical solution, the orthogonal projection of the through hole along the first direction is triangular or rectangular, such that the through hole is the triangular hole or the rectangular hole. On the one hand, it is convenient to process the through hole in the first current collecting member, which is beneficial to reducing the processing difficulty of the through hole. On the other hand, the size of the angle of the first corner can be effectively controlled to alleviate a phenomenon that the angle of the first corner is too large or too small.

In some embodiments, the plurality of corners are formed on the hole wall surface of the through hole, the hole wall surface of the through hole includes a plurality of first wall surfaces along the circumferential direction of the through hole, the corner is formed between every adjacent two first wall surfaces, the plurality of corners include the first corner and a second corner, and the angle of the second corner facing the side of the through hole is greater than 180°.

In the above technical solution, a second corner is further formed on the hole wall surface of the through hole, and an angle of the second corner facing a side of the through hole is greater than 180 degrees, such that the second corner is a corner structure protruding inward towards the through hole. The size of the angle of the first corner can be adjusted through the second corner, such that the angle of the first corner is reduced, and the thermal runaway gas easily tears the first current collecting member from the first corner.

In some embodiments, the plurality of corners include a plurality of first corners and a plurality of second corners, and the first corners and the second corners are alternately arranged along the circumferential direction of the through hole.

In the above technical solution, the first corner and the second corner are arranged alternately along the circumferential direction of the through hole, such that a first corner is formed between every two adjacent second corners, thereby facilitating adjustment of the size of the angle of the first corner located between the two second corners by the two adjacent second corners.

In some embodiments, angles of the plurality of first corners are all the same, and angles of the plurality of second corners are all the same.

In the above technical solution, the angles of the plurality of first corners are all the same and the angles of the plurality of second corners are all the same, and thus, the orthogonal projection of the through hole along the first direction is in a regular polygonal shape. Therefore, on the one hand, it is convenient to manufacture and process the through hole, which is beneficial to reducing the manufacturing difficulty of the first current collecting member. On the other hand, the acting forces by which the first current collecting member is torn from the plurality of first corners are all the same, such that the thermal runaway gas tears the first current collecting member from the plurality of first corners.

In some embodiments, the first current collecting member is of a disk-like structure, and a central axis of the first current collecting member coincides with a central axis of the through hole.

In the above technical solution, the central axis of the first current collecting member and the central axis of the through hole are arranged to coincide with each other, such that the through hole is located at the center position of the first current collecting member, and when the first current collecting member is electrically connected to the electrode assembly and the first electrode lead-out portion, the region of the first current collecting member surrounding the outer side of the through hole may be electrically connected to the electrode assembly and the first electrode lead-out portion, and there is no need to secondarily position the first current collecting member so as to avoid the through hole, thereby reducing the difficulty of assembling the first current collecting member into the housing assembly and improving the assembling efficiency of the battery cell.

In some embodiments, every two adjacent first wall surfaces are connected through a chamfered surface along the circumferential direction of the through hole.

In the above configuration, the two adjacent first wall surfaces are connected through the chamfered surface, which is beneficial to reducing the difficulty of forming the through hole in the first current collecting member, and reducing the requirement on equipment for forming the through hole in the first current collecting member.

In some embodiments, the electrode assembly has a central channel extending along the first direction, and at least a part of the central channel along the orthogonal projection along the first direction is located within the through hole.

In the above technical solution, at least a part of the orthogonal projection of the central channel of the electrode assembly along the first direction is located in the through hole of the first current collecting member, such that the through hole and the central channel are structures overlapped along the first direction, and thus, the thermal runaway gas generated in the central channel of the electrode assembly can directly act on the first corner of the hole wall surface of the through hole, thereby more easily tearing the first current collecting member from the first corner.

In some embodiments, the battery cell is cylindrical, and an axial direction of the battery cell is the same as the first direction.

In the above technical solution, the battery cell is arranged as the cylindrical structure, such that the battery cell has advantages such as a high capacity, a long cycle life, a wide use environment, and the like.

In some embodiments, the housing assembly includes a housing, the electrode assembly is accommodated in the housing, and at least a part of the housing forms the first electrode lead-out portion.

In the above technical solution, the housing assembly is provided with the housing, and at least a part of the housing serves as the first electrode lead-out portion, such that the electrode assembly is connected to the housing through the first current collecting member to enable input and output of electric energy of the battery cell. The structure is simple and convenient to assemble.

In some embodiments, the housing includes a shell and an end cap; the shell includes a side wall and a bottom wall which are integrally molded, the side wall is arranged around the bottom wall, one end of the side wall is connected to the bottom wall, the other end of the side wall surrounds an opening opposite to the bottom wall, and the side wall and the bottom wall together define an accommodating chamber for accommodating the electrode assembly; and the bottom wall is the first electrode lead-out portion.

In the above technical solution, the bottom wall of the shell is used as the first electrode lead-out portion for outputting or inputting electric energy of the battery cell, such that the first electrode lead-out portion can be separated from the end cap, and thus, a phenomenon that a force generated when the first electrode lead-out portion is pulled or twisted by a component such as a bus bar connected to the first electrode lead-out portion acts between the end cap and the shell can be effectively alleviated to reduce the risk of a connection failure between the end cap and the shell, which is further beneficial to reducing the risk of liquid leakage during the use of the battery cell.

In some embodiments, the first current collecting member is arranged between the end cap and the electrode assembly along the first direction, where the first current collecting member is connected to the end cap, and the end cap is electrically connected to the side wall to electrically connect the first current collecting member and the bottom wall; or the first current collecting member is connected to the side wall to electrically connect the first current collecting member and the bottom wall.

In the above technical solution, the first current collecting member is arranged between the end cap and the electrode assembly along the first direction, and the first current collecting member can be indirectly electrically connected to the shell through the end cap or the first current collecting member can be directly connected to the side wall of the shell, such that the first current collecting member is electrically connected to the bottom wall serving as the first electrode lead-out portion. The structure is simple and convenient to implement.

In some embodiments, the first current collecting member is arranged between the bottom wall and the electrode assembly along the first direction, and the first current collecting member is connected to the bottom wall.

In the above aspect, the first current collecting member is arranged between the bottom wall and the electrode assembly along the first direction, such that the first current collecting member can be directly connected to the bottom wall, so as to electrically connect the first current collecting member to the bottom wall serving as the first electrode lead-out portion. The structure is simple and convenient to assemble.

In some embodiments, the housing includes a shell and an end cap, where an accommodating chamber having an opening is formed in the shell and the electrode assembly is accommodated in the accommodating chamber; and the end cap, closes the opening, where the end cap is the first electrode lead-out portion.

In the above aspect, the end cap of the housing is used as the first electrode lead-out portion for outputting or inputting electric energy of the battery cell, it is beneficial to reducing the difficulty of assembly between the first current collecting member and the first electrode lead-out portion and between the first current collecting member and the electrode assembly, such that the production efficiency of the battery cell can be improved.

In some embodiments, the first current collecting member is arranged between the end cap and the electrode assembly along the first direction, and the first current collecting member is connected to the end cap.

In the above technical solution, the first current collecting member is arranged between the end cap and the electrode assembly along the first direction, such that the first current collecting member can be directly connected to the end cap, so as to electrically connect the first current collecting member to the end cap serving as the first electrode lead-out portion. The structure is simple and convenient to assemble.

In some embodiments, the housing assembly further includes a housing, the electrode assembly being accommodated in the housing, where the first electrode lead-out portion is mounted on the housing in an insulated manner, and at least a part of the first current collecting member is arranged between the first electrode lead-out portion and the electrode assembly along the first direction, and the first current collecting member is connected to the first electrode lead-out portion.

In the above technical solution, the housing assembly is further provided with a housing, and the first electrode lead-out portion is mounted on the housing in an insulated manner, such that the first electrode lead-out portion can realize input or output of electric energy of the battery cell. The battery cell having such a structure can reduce the risk of a short circuit between the first electrode lead-out portion and the housing to improve the use reliability of the battery cell.

In some embodiments, the housing includes a shell and an end cap; the shell includes a side wall and a bottom wall which are integrally molded, the side wall is arranged around the bottom wall, one end of the side wall is connected to the bottom wall, the other end of the side wall surrounds an opening opposite to the bottom wall, and the side wall and the bottom wall together define an accommodating chamber for accommodating the electrode assembly; the end cap closes the opening, where the first electrode lead-out portion is mounted on the end cap in an insulated manner; or the first electrode lead-out portion is mounted on the bottom wall.

In the above technical solution, the first electrode lead-out portion is mounted on the end cap in an insulated manner, such that the first electrode lead-out portion can realize output or input of electric energy of the battery cell. By using the battery cell having such a structure, the first electrode lead-out portion can be easily mounted on the housing in an insulated manner, which is beneficial to reducing the difficulty of assembly between the first electrode lead-out portion and the housing, thereby improving the production efficiency of the battery cell. Similarly, the first electrode lead-out portion is mounted on the bottom wall of the shell in an insulated manner, such that the first electrode lead-out portion can output or input the electric energy of the battery cell. By using the battery cell having such a structure, the first electrode lead-out portion is away from the end cap, such that a phenomenon that a force generated when the bottom wall is pulled or twisted by the first electrode lead-out portion acts on the end cap can be alleviated to reduce the risk of a connection failure between the end cap and the shell, which is further beneficial to reducing the risk of liquid leakage during the use of the battery cell.

In some embodiments, the battery cell further includes a pressure relief mechanism arranged on the housing and configured to relieve an internal pressure of the battery cell, where the pressure relief mechanism is arranged opposite to the through hole along the first direction.

In the above technical solution, the pressure relief mechanism is arranged in the housing, and the pressure relief mechanism and the through hole are structures arranged opposite to each other along the first direction, such that at least a part of the orthogonal projection of the pressure relief mechanism along the first direction is located in the through hole. On the one hand, the internal pressure of the battery cell can be relieved by the pressure relief mechanism to reduce the risk of fire and explosion of the battery cell, and on the other hand, the thermal runaway gas can be directly discharged from the pressure relief mechanism after the first current collecting member is torn from the first corner by the thermal runaway gas, which can further reduce the phenomenon that the first current collecting member prevents the thermal runaway gas from being discharged from the inside of the battery cell by arranging the pressure relief mechanism.

In a third aspect, an embodiment of the present application provides a battery, including the battery cell described above.

In a third aspect, an embodiment of the present application further provides an electric device, including the battery described above, where the battery is configured to provide electric energy.

### DESCRIPTION OF DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a vehicle according to some embodiments of the present application.
FIG. 2 is an exploded structural view of a battery according to some embodiments of the present application.
FIG. 3 is a schematic structural diagram of a battery cell according to some embodiments of the present application;
FIG. 4 is an exploded structural view of a battery cell according to some embodiments of the present application;
FIG. 5 is a sectional view of a battery cell according to some embodiments of the present application;
FIG. 6 is a partial sectional view of a battery cell according to some embodiments of the present application;
FIG. 7 is a schematic structural diagram of a current collecting member according to some embodiments of the present application;
FIG. 8 is a schematic structural diagram of a current collecting member according to yet some other embodiments of the present application;
FIG. 9 is a schematic structural diagram of a current collecting member according to yet some other embodiments of the present application; and
FIG. 10 is a schematic structural diagram of a current collecting member according to some other embodiments of the present application.

Reference signs: 1000, vehicle; 100, battery; 10, case; 11, first case body; 12, second case body; 20, battery cell; 21, housing assembly; 211, first electrode lead-out portion; 212, housing; 2121, shell; 2121a, opening; 2121b, side wall; 2121c, bottom wall; 2122, end cap; 2122a, protrusion; 213, second electrode lead-out portion; 22, electrode assembly; 221, first lug; 222, second lug; 223, central channel; 23, first current collecting member; 231, through hole; 2311, first wall surface; 2312, chamfered surface; 232, first corner; 233, second corner; 24, second current collecting member; 25, pressure relief mechanism; 200, controller; 300, motor; X-first direction.

### DESCRIPTION OF EMBODIMENTS

To make the objectives, technical solutions, and advantages of embodiments of the present application clearer, the following clearly describes the technical solutions in embodiments of the present application with reference to the accompanying drawings in the embodiments of the present application. Clearly, the described embodiments are some but not all of the embodiments of the present application. All other embodiments obtained by a person of ordinary skill in the art based on the embodiments of the present application without making creative efforts shall fall within the protection scope of the present application.

Unless otherwise defined, all technical and scientific terms used in the present application have the same meaning as commonly understood by a person skilled in the art of the present application. In the present application, the terms used in the specification of the present application are used only for the purpose of describing specific embodiments and are not intended to limit the present application, and the terms "comprise", "have", and any variations thereof in the specification and claims of the present application and the foregoing description of the drawings are intended to cover a non-exclusive inclusion. The terms "first", "second", and the like in the specification and claims of the present application or in the accompanying drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be noted that, unless explicitly specified and defined otherwise, the terms "mounted", "connected", "connect", and "attached" are to be understood in a broad sense, for example, may be fixedly connected, detachably connected, or integrally connected, may be directly connected, may be indirectly connected via an intermediate medium, or may be internal communication between two components. Those of ordinary skill in the art can understand specific meanings of these terms in the present application according to specific situations.

The term "and/or" in the present application is only an associative relationship for describing associated objects, indicating that three relationships may be present. For example, A and/or B may indicate three cases: presence of only A; presence of both A and B; and presence of only B. In addition, the symbol *"*/*"* in the present application generally represents an "or" relationship between associated objects.

In the embodiments of the present application, the same reference numerals denote the same component, and a detailed description of the same component is omitted in different embodiments for sake of brevity. It should be understood that the size of various components, such as the thickness, length, and width, and the size of the integrated device, such as the overall thickness, length, and width, in the embodiments of the present application shown in the figures are merely illustrative and should not be construed as limiting the present application.

The term "a plurality" as used herein refers to more than two (including two).

In the embodiments of the present application, the battery cell may be a secondary battery, and the secondary battery refers to a battery cell that may be continuously used by activating an active material by charging the battery cell after discharging thereof.

The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, without limitation for the battery cell in the embodiments of the present application.

The battery cell generally includes an electrode assembly. The electrode assembly includes a positive electrode, a negative electrode, and a spacer. During charge and discharge of the battery cell, intercalation/de-intercalation of active ions (e.g., lithium ions) are enabled at the positive electrode and negative electrode by moving the active ions between the positive electrode and the negative electrode. The spacer is provided between the positive electrode and the negative electrode to prevent the positive and negative electrodes from being short-circuited and to allow active ions to pass therethrough.

In some embodiments, the positive electrode and negative electrode may be a positive plate which may include a positive current collector and a positive active material disposed on at least one surface of the positive current collector.

As an example, the positive current collector has two surfaces opposite in its own thickness direction, and the positive active material is provided on either one or both of the two opposite surfaces of the positive current collector.

As an example, for the positive current collector, a metal foil or a composite current collector may be employed. For example, as the metal foil, aluminum or stainless steel which is subjected to surface treatment by silver, stainless steel, copper, aluminum, nickel, a carbon electrode, carbon, nickel, titanium, or the like can be used. The composite current collector may include a high-molecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the positive active material may include at least one of a lithium-containing phosphate, a lithium-transition metal oxide, and respective modified compounds thereof. However, the present application is not limited to these materials, and other conventional materials that can be used as a positive electrode active material of a battery may also be used. These positive electrode active materials may be used alone or in combination of two or more thereof. Here, examples of the lithium-containing phosphate may include, but are not limited to, at least one of lithium iron phosphate (e.g., LiFePO₄, also referred to as LFP), a composite material of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Examples of the lithium-transition metal oxide may include, but are not limited to, at least one of lithium cobalt oxide (e.g., LiCoO₂), lithium nickel oxide (e.g., LiNiO₂), lithium manganese oxide (e.g., LiMnO₂, and LiMn2O₄), lithium nickel cobalt oxide, lithium manganese cobalt oxide, lithium nickel manganese oxide, lithium nickel cobalt manganese oxide (e.g., LiNi_{1/3}, Co_{1/3}Mn_{1/3}O₂(also referred to as NCM₃₃₃), LiNi_{0.5}Co_{0.2}Mn_{0.3}O₂(also referred to as NCM₅₂₃), LiNi_{0.5}Co_{0.25}Mn_{0.25}O₂(also referred to as NCM₂₁₁), LiNi_{0.6}Co_{0.2}Mn_{0.2}O₂(also referred to as NCM₆₂₂), LiNi_{0.8}Co_{0.1}Mn_{0.1}O₂(also referred to as NCM₈₁₁), lithium nickel cobalt aluminum oxide (e.g., LiNi_{0.85}Co_{0.15}Al_{0.05}O₂), a modified compound thereof and the like.

In some embodiments, a foamed metal may be used for the positive electrode. The foamed metal may be foamed nickel, foamed copper, foamed aluminum, foamed alloy, foamed carbon, or the like. When the foamed metal is used as the positive electrode, its surface the foamed metal may not be provided with the positive active material, and of course, the positive active material may be provided. As an example, within the foamed metal, a lithium source material, which is a lithium metal and/or a lithium-rich material, a potassium metal or a sodium metal may also be filled or/and deposited.

In some embodiments, the negative electrode may be a negative plate that may include a negative current collector.

As an example, for the negative current collector, a metal foil, a foamed metal, or a composite current collector may be employed. For example, as the metal foil, aluminum or stainless steel which is subjected to surface treatment by silver, stainless steel, copper, aluminum, nickel, carbon electrode, carbon, nickel, titanium, or the like can be employed. The foamed metal may be foamed nickel, foamed copper, foamed aluminum, foamed alloy, foamed carbon, or the like. The composite current collector may include a high-molecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the negative plate may include a negative current collector and a negative active material provided on at least one surface of the negative current collector.

As an example, the negative current collector has two surfaces opposite in its own thickness direction, and the negative active material is provided on either one or both of the two opposite surfaces of the negative current collector.

As an example, for the negative active material, a negative active material which is known in the art for a battery cell may be used. As an example, the negative electrode active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative electrode active material of a battery may also be used. These negative electrode active materials may be used alone or in combination of two or more thereof.

In some embodiments, the material of the positive current collector may be aluminum and the material of the negative current collector may be copper.

In some embodiments, the electrode assembly further includes a separator, arranged between the positive electrode and the negative electrode.

In some implementations, the spacer is a separator. There may be various types of separation films, and any known porous structure separation films with good chemical stability and mechanical stability may be used.

As an example, a material of the separation film may be selected from at least one of a glass fiber, a non-woven fabric, polyethylene, polypropylene, and polyvinylidene fluoride. The separator may be a single-layer film or a multilayer composite film. When the separator is a multilayer composite film, the materials of respective layers may be the same or different. The spacer may be a single component located between the positive electrode and negative electrode, or may be attached to the surfaces of the positive electrode and negative electrode.

In some implementations, the spacer is a solid electrolyte. The solid electrolyte is disposed between the positive electrode and the negative electrode, and serves to transfer ions and separate the positive electrode and negative electrode.

In some implementations, the battery cell further comprises an electrolyte that functions to conduct ions between the positive electrode and negative electrode. The electrolyte may be liquid, gel, or solid. Here, a liquid electrolyte comprises an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from ether solvents. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and a crown ether.

Here, a gel electrolyte comprises a backbone network using a polymer as an electrolyte, in combination with an ionic liquid - lithium salt.

Here, a solid electrolyte includes a polymer solid electrolyte, an inorganic solid electrolyte, and a composite solid electrolyte.

As an example, the polymer solid electrolyte may be polyether (polyethylene oxide), polysiloxane, polycarbonate, polyacrylonitrile, polyvinylidene fluoride, polymethyl methacrylate, a single-ion polymer, a poly-ionic liquid-lithium salt, cellulose, or the like.

As an example, the inorganic solid electrolyte may be one or more of an oxide solid electrolyte (crystalline perovskites, sodium superconducting ion conductors, and garnets, amorphous LiPON thin films), a sulfide solid electrolyte (crystalline lithium-superion conductors (lithium germanium phosphorus sulfide, and argyrodite), and amorphous sulfides), and a halide solid electrolyte, a nitride solid electrolyte, and a hydride solid electrolyte.

As an example, the composite solid electrolyte is formed by adding an inorganic solid electrolyte filler in a polymer solid electrolyte.

In some implementations, the electrode assembly is a winding structure. The positive plate and the negative plate are wound into a winding structure.

In some implementations, the electrode assembly is a laminated structure.

As an example, a plurality of positive plates and a plurality of negative plates may be provided, and are alternately laminated.

As an example, a plurality of positive plates may be provided, the negative plate may be folded to form a plurality of laminated folding sections, and one positive plate is sandwiched between adjacent folding sections.

As an example, the positive plate and negative plate are both folded to form a plurality of laminated folding sections.

As an example, a plurality of spacers may be provided, between any adjacent positive plates or negative plates respectively.

As an example, the spacer may be continuously provided between any adjacent positive plates or negative plates by folding or winding.

In some implementations, the electrode assembly may have a cylindrical shape, a flat shape, a polygonal column shape, or the like.

In some implementations, the electrode assembly is provided with a tab that may conduct current from the electrode assembly. The tab includes a positive tab and a negative tab.

In some implementations, the battery cell may include a housing. The housing is used to enclose components such as the electrode assembly and the electrolyte. The housing may be a steel housing, an aluminum housing, a plastic housing (e.g., polypropylene), a composite metal housing (e.g., a copper-aluminum composite housing), an aluminum plastic film, or the like.

As an example, the battery cell may be a cylindrical battery cell, a prismatic battery cell, or another shaped battery cell, and the prismatic battery cell includes, but is not limited to, a square-housing battery cell, a blade-shaped battery cell, and a polygon prismatic battery cell, for example, a hexagonal battery cell, and the like.

A battery mentioned in the embodiments of the present application refers to a single physical module including one or a plurality of battery cells to provide a higher voltage and capacity.

In some embodiments, the battery may be a battery module, and when there are a plurality of battery cells, the plurality of battery cells are arranged and fixed to form a battery module.

In some embodiments, the battery may be a battery pack including a box and a battery cell, and the battery cell or the battery module is accommodated in the box.

In some embodiments, the box may be a part of a chassis structure of a vehicle. For example, a part of the box may be at least a part of a floor of a vehicle, or a part of the box may be at least a part of a cross beam and a side beam of a vehicle.

In some embodiments, the battery may be an energy storage device. The energy storage device includes an energy storage container, an energy storage cabinet, and the like.

Batteries have outstanding advantages such as high energy density, low environmental pollution, high power density, long service life, wide adaptation range, low self-discharge coefficient, and the like, and are an important component in the development of new energy nowadays. In the development of battery technologies, various design factors, for example, performance parameters such as energy density, cycle life, discharge capacity, and charge/discharge rate are simultaneously taken into consideration. In addition, the safety of the battery needs to be taken into consideration. With the rapid development and increase in demand of batteries, the demand for batteries in terms of use reliability and the like is also increasing.

For a general battery cell, the housing of the battery cell generally includes a shell and an end cap, the end cap covers an opening of the shell, and in order to facilitate the assembly and production of the battery cell, particularly in a cylindrical battery cell, a current collecting member is generally arranged in the shell, and a lug of an electrode assembly and an electrode terminal arranged at one end of the housing are connected by the current collecting member, such that the current collecting member plays a role of through connection to input or output electric energy of the battery cell. However, in the battery cell of this structure, when thermal runaway occurs in the battery cell and the internal pressure increases, the battery cell needs to discharge the gas generated inside the battery cell due to the thermal runaway to discharge the internal pressure of the battery cell, such that the risk of explosion of the battery cell due to excessive internal pressure can be reduced. However, the current collecting member arranged in the housing may block the thermal runaway gas generated inside the battery cell, which is disadvantageous in discharging the gaseous effluents generated inside the battery cell out of the housing when the thermal runaway occurs in the battery cell, resulting in poor exhaust smoothness and exhaust efficiency when the internal pressure of the battery cell is discharged, thereby very easily causing risks such as fire and explosion during the use of the battery cell, such that the use reliability of the battery cell is low, resulting in a great safety hazard during the use of the battery cell.

In view of the above, in order to solve the problem of low reliability of the battery cell during use, an embodiment of the present application provides a battery cell, including a housing assembly, an electrode assembly, and a first current collecting member. The housing assembly includes a first electrode lead-out portion for inputting or outputting electric energy. The electrode assembly and the first current collecting member each are accommodated in the housing assembly, the first current collecting member is located at one end of the electrode assembly along a first direction, and the first current collecting member electrically connects the first electrode lead-out portion and the electrode assembly. The first current collecting member is provided with a through hole that penetrates the first current collecting member along the first direction, a first corner is formed on a hole wall surface of the through hole along an orthogonal projection along the first direction, and a part of the through hole along the orthogonal projection along the first direction is located within the first corner.

In the battery cell of this structure, the through hole penetrating both sides of the first current collecting member along the first direction is formed in the first current collecting member, the first corner is formed on the hole wall surface of the through hole along the orthogonal projection along the first direction, and the part of the through hole along the orthogonal projection along the first direction is located within the first corner, such that the first corner formed on the hole wall surface of the through hole is an outward protruding corner structure away from the through hole, the acting force acted on the first current collecting member can concentrate stress at the first corner on the hole wall surface of the through hole when the battery cell is in a thermal runaway and relieves an internal gas, and the first current collecting member is torn from the first corner on the hole wall surface of the through hole, such that an area of the region through which the thermal runaway gas passes can be increased to reduce blockage of the first current collecting member on the thermal runaway gas inside the battery cell, to further effectively improve the exhaust smoothness and the exhaust efficiency of the battery cell, so as to reduce the risk such as fire and explosion due to a poor pressure relief effect of the battery cell, which is beneficial to improving the use reliability of the battery cell.

The battery cell disclosed in the embodiments of the present application may be, but not limited to, used in an electric device such as a vehicle, a ship, or an aircraft. The battery cell, the battery and the like disclosed in the present application may be used to form a power source system of the electric device, which, thus, is beneficial to alleviating risks such as fire and explosion of the battery cell during use, so as to improve the use reliability of the battery cell.

Provided in the embodiments of the present application is an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate the description, in the following embodiments, as an example for description, an electric device in an embodiment of the present application is a vehicle.

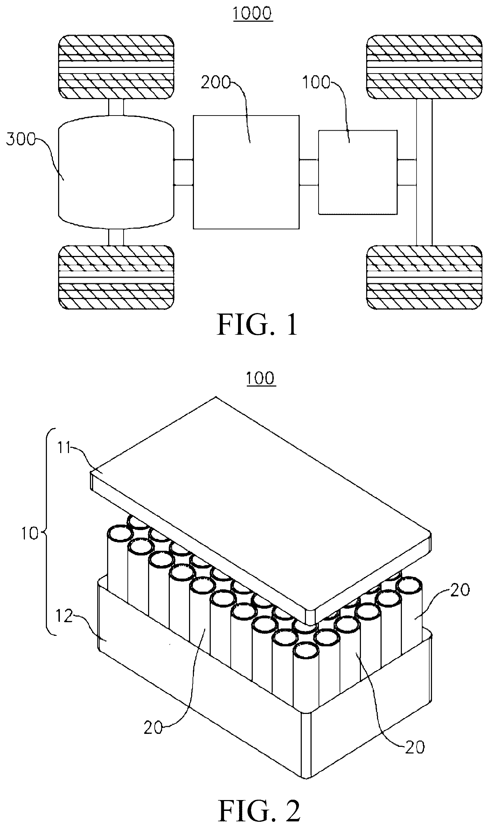

Referring to FIG. 1, FIG. 1 is a schematic diagram of a structure of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. A battery 100 is arranged inside the vehicle 1000, and the battery 100 may be arranged at the bottom of the vehicle 1000, or arranged at a head of the vehicle 1000, or further arranged at a tail of the vehicle 1000. The battery 100 may be configured to supply electricity to the vehicle 1000, for example, the battery 100 may be used as an operating power source or a using power source of the vehicle 1000. The vehicle 1000 may further include a controller 200 and a motor 300, and the controller 200 is configured to control the battery 100 to supply electricity to the motor 300, for example, for a working power requirement for the vehicle 1000 during starting, navigating, and driving the vehicle.

In some embodiments of the present application, the battery 100 may be used not only as the operating power source or using power source of the vehicle 1000, but also as a driving power source of the vehicle 1000, instead of or partially instead of fuel or natural gas to provide driving power for the vehicle 1000.

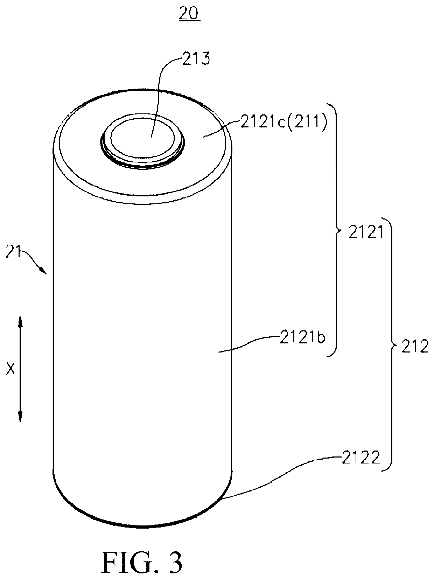

Referring to FIG. 2 to FIG. 3, FIG. 2 is an exploded structural view of a battery 100 according to some embodiments of the present application, and FIG. 3 is a schematic structural diagram of a battery cell 20 according to some embodiments of the present application. The battery 100 includes a case 10 and a battery cell 20. The battery cell 20 is accommodated in the case 10.

Here, the case 10 is configured to provide an accommodating space for the battery cell 20, and the case 10 may have various structures. In some embodiments, the case 10 may include a first case body 11 and a second case body 12, the first case body 11 and the second case body 12 cover each other, and the first case body 11 and the second case body 12 together define the accommodating space for accommodating the battery cell 20. The second case body 12 may be of a hollow structure with an opening in one end, the first case body 11 may be of a plate-shaped structure, and the first case body 11 covers an opening side of the second case body 12, such that the first case body 11 and the second case body 12 together define the accommodating space. The first case body 11 and the second case body 12 each may be of a hollow structure with an opening in one end, and an opening side of the first case body 11 covers the opening side of the second case body 12.

Of course, the case 10 formed by the first case body 11 and the second case body 12 may be in various shapes such as a cylinder, a rectangular cuboid, a cube, and the like. Exemplarily, in FIG. 2, the shape of the case 10 is a rectangular cuboid.

In the battery 100, one or more battery cells 20 may be arranged in the case 10. When a plurality of battery cells 20 are arranged in the case 10, the plurality of battery cells 20 may be subjected to series connection, parallel connection, or series-parallel connection, and the series-parallel connection means that the plurality of battery cells 20 are subjected to both series connection, and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10.

In some embodiments, the battery 100 may further include other structures. For example, the battery 100 may further include a current converging component, configured to connect a plurality of battery cells 20, so as to implement an electrical connection among the plurality of battery cells 20.

Here, each of the battery cells 20 may be a secondary battery or a primary battery, or may be a lithium-sulfur battery, a sodium-ion battery, or a magnesium-ion battery, but is not limited thereto. The battery cell 20 may be in a shape of a cylinder, a prism, or other shapes. Exemplarily, in FIG. 3, the battery cell 20 is of a cylindrical structure.

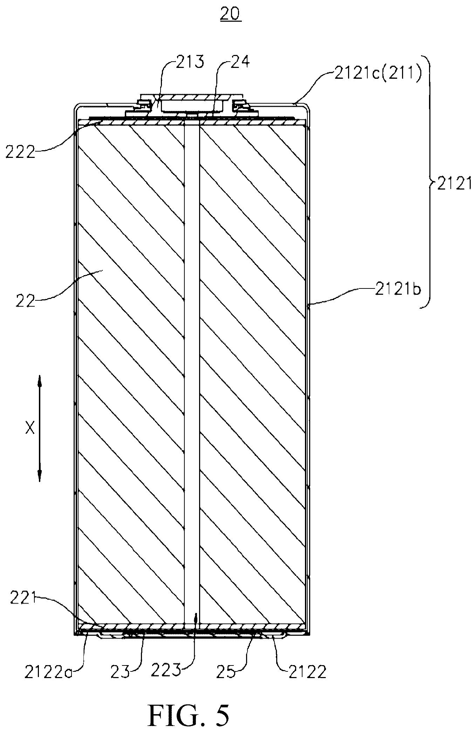

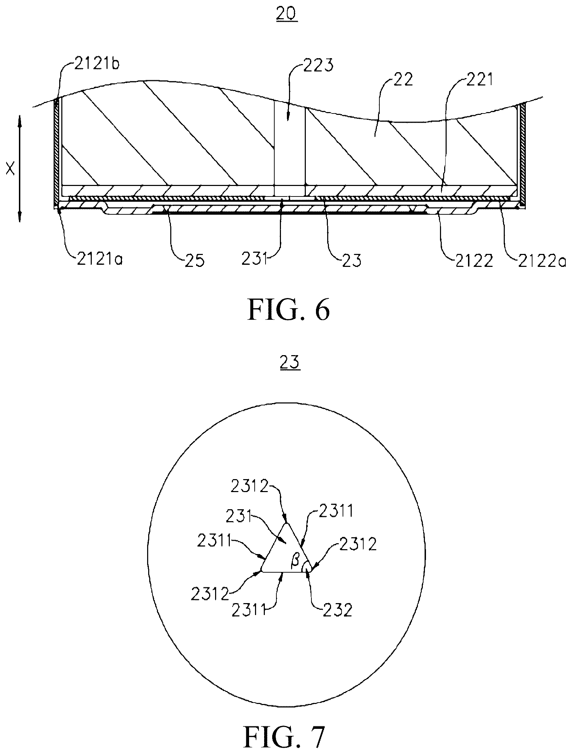

According to some embodiments of the present application, referring to FIG. 3 and further to FIG. 4, FIG. 5, FIG. 6, and FIG. 7, FIG. 4 is an exploded structural view of a battery cell 20 according to some embodiments of the present application, FIG. 5 is a sectional view of the battery cell 20 according to some embodiments of the present application, FIG. 6 is a partial sectional view of the battery cell 20 according to some embodiments of the present application, and FIG. 7 is a schematic structural view of a first current collecting member 23 according to some embodiments of the present application. The present application provides a battery cell 20, and the battery cell 20 may include a housing assembly 21, an electrode assembly 22, and a current collecting member 23. The housing assembly 21 includes a first electrode lead-out portion 211 for inputting or outputting electric energy. The electrode assembly 22 is accommodated in the housing assembly 21. The first current collecting member 23 is accommodated in the housing assembly 21, the first current collecting member 23 is located at one end of the electrode assembly 22 along a first direction, and the first current collecting member 23 electrically connects the first electrode lead-out portion 211 and the electrode assembly 22. The first current collecting member 23 is provided with a through hole 231 that penetrates the first current collecting member 23 along the first direction X, a first corner 232 is formed on a hole wall surface of the through hole 231 along an orthogonal projection along the first direction X, and a part of the through hole 231 along the orthogonal projection along the first direction X is located within the first corner 232.

The housing assembly 21 may include a housing 212, the electrode assembly 22 and the first current collecting member 23 may be accommodated in the housing 212, and the housing 212 may further be configured to accommodate an electrolyte, for example, an electrolyte solution, and the like. The housing 212 may have various structural forms, for example, a cylinder or a prism, and the like. Similarly, the housing 212 may be made of various materials, for example, copper, iron, aluminum, steel, or an aluminum alloy, and the like.

The housing assembly 21 includes a first electrode lead-out portion 211 for inputting or outputting electric energy, the first electrode lead-out portion 211 functions to be electrically connected to the electrode assembly 22 so as to output or input electric energy of the battery cell 20, the first electrode lead-out part 211 may be a negative electrode that outputs the battery cell 20, that is, the first electrode lead-out portion 211 functions as a negative output electrode of the battery cell 20, and of course, the first electrode lead-out portion 211 may also be a positive electrode of the outputting battery cell 20, that is, the first electrode lead-out portion 211 serves as a positive output electrode of the battery cell 20. Similarly, the first electrode lead-out portion 211 may have various structures, and the first electrode lead-out portion 211 may be the housing 212 or an electrode terminal mounted on the housing 212 in an insulated manner.

In some embodiments, the housing 212 may include a shell 2121 and an end cap 2122, an accommodating cavity is formed in the shell 2121 and is configured to accommodate the electrode assembly 22, and the accommodating chamber is provided with an opening 2121a, that is, the shell 2121 is a hollow structure having an opening 2121a in one end, where the shell 2121 includes a side wall 2121b and a bottom wall 2121c which are integrally formed, the side wall 2121b is arranged around the bottom wall 2121c, along the first direction X, one end of the side wall 2121b is connected to the bottom wall 2121c and the other end is enclosed to form the opening 2121a, the end cap 2122 and the bottom wall 2121c are arranged opposite to each other along the first direction X, and the end cap 2122 covers the opening 2121a of the shell 2121 and forms a sealed connection to form a sealed space for accommodating the electrode assembly 22 and the electrolyte.

When the battery cell 20 is assembled, the electrode assembly 22 may be placed in the shell 2121 first, the shell 2121 may be filled with the electrolyte, and then the end cap 2122 may cover the opening 2121a of the shell 2121 to complete the assembly of the battery cell 20.

The shell 2121 may have various shapes such as a cylindrical structure, a prismatic structure, and the like. The shape of the shell 2121 may be determined according to a specific shape of the electrode assembly 22. For example, if the electrode assembly 22 is of the cylindrical structure, the shell 2121 of a cylindrical structure may be used. Of course, the end cap 2122 may have various structures, for example, the end cap 2122 may be of a plate-like structure or a hollow structure with one end opened. Illustratively, in FIG. 3, the shell 2121 is of a cylindrical structure.

Of course, it may be understood that the housing 212 is not limited to the above structure, and the housing 212 may be of another structure, for example, the housing 212 may include a shell 2121 and two end caps 2122, the shell 2121 is of a hollow structure with openings 2121a in two opposite sides, one end cap 2122 correspondingly covers one opening 2121a of the shell 2121 and forms a sealed connection to form a sealed space for accommodating the electrode assembly 22 and the electrolyte, that is, openings 2121a are formed in two opposite sides of the shell 2121, and two end caps 2122 respectively cover both sides of the shell 2121 to close the corresponding openings 2121a.

It should be noted that the electrode assembly 22 is a component in the battery cell 20 in which an electrochemical reaction occurs, and the electrode assembly 22 may include a positive plate, a negative plate, and a spacer. The electrode assembly 22 may have various structures, for example, the electrode assembly 22 may be of a winding structure formed by winding the positive plate, the spacer, and the negative plate or a laminated structure formed by laminating and arranging the positive plate, the spacer, and the negative plate. The electrode assembly 22 is provided with a lug for outputting or inputting electric energy of the electrode assembly 22. The lug of the electrode assembly 22 is a component formed by laminating and connecting regions not coated with the positive electrode active material layer on the positive plate or a component formed by laminating and connecting regions not coated with the negative electrode active material layer on the negative plate.

The spacer is a separation film, and the main material of the spacer may be selected from at least one of a glass fiber, a non-woven fabric, polyethylene, polypropylene, polyvinylidene fluoride, and a ceramic.

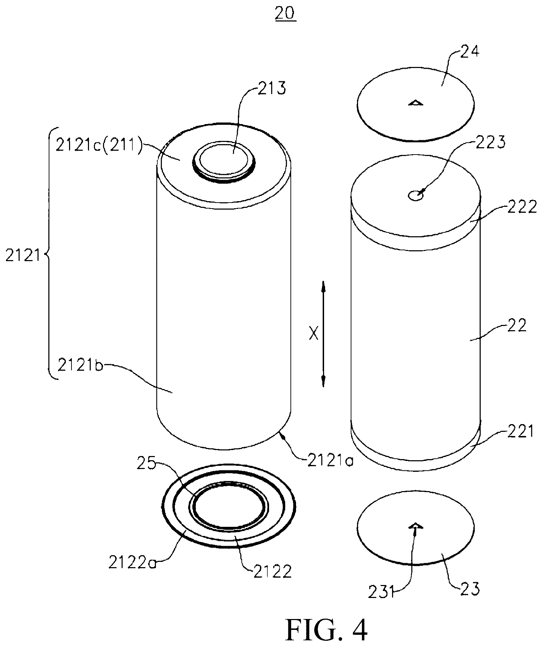

Exemplarily, in FIG. 4, the electrode assembly 22 is a winding structure formed by winding a positive plate, a spacer, and a negative plate, and the electrode assembly 22 is cylindrical. Similarly, there may be one or more electrode assemblies 22 accommodated in the housing 212, and exemplarily, in FIG. 4, there is one electrode assembly 22 accommodated in the housing 212.

There are two lugs in each of the electrode assemblies 22, and the two lugs have opposite polarities. The two lugs are a first lug 221 and a second lug 222, respectively. The first lug 221 and the second lug 222 are respectively configured to output or input a positive electrode and a negative electrode of the electrode assembly 22. If the first lug 221 is configured to output the positive electrode of the electrode assembly 22, the first lug 221 is the component formed by laminating and connecting the region not coated with the positive electrode active material layer on the positive electrode plate, and correspondingly, the second lug 222 is configured to output the negative electrode of the electrode assembly 22; and if the first lug 221 is configured to output the negative electrode of the electrode assembly 22, the first lug 221 is the component formed by laminating and connecting the region not coated with the negative electrode active material layer on the negative electrode plate, and correspondingly, the second lug 222 is configured to output the positive electrode of the electrode assembly 22.

Exemplarily, in FIG. 4, along the first direction X, the first lug 221 and the second lug 222 of the electrode assembly 22 are arranged at both ends of the electrode assembly 22, respectively, the first lug 221 is located at an end of the electrode assembly 22 facing the first current collecting member 23, and the first lug 221 is connected to the first current collecting member 23 to electrically connect the first electrode lead-out part 211 to the electrode assembly 22. There may be various connecting modes between the first lug 221 and the first current collecting member 23, for example, welding or abutting, and the like.

It should be noted that the housing assembly 21 further includes a second electrode lead-out portion 213 having a polarity opposite to that of the first electrode lead-out portion 211, and the second electrode lead-out portion 213 is configured to be electrically connected to the second lug 222 of the electrode assembly 22, such that the first electrode lead-out portion 213 and the second electrode lead-out portion 211 can be used as the positive electrode and the negative electrode of the battery cell 20, respectively.

It should be noted that when the first electrode lead-out portion 211 is an electrode terminal which is mounted on the end cap 2122 of the housing 212 in an insulated manner, the second electrode lead-out portion 213 may be the shell 2121 of the housing 212 or the end cap 2122 of the housing 212; when the first electrode lead-out portion 211 is an electrode terminal which is mounted on the bottom wall 2121c of the housing 212 in an insulated manner, the second electrode lead-out portion 213 may be the shell 2121 of the housing 212 or the end cap 2122 of the housing 212; when the first electrode lead-out portion 211 is the bottom wall 2121c of the shell 2121, the second electrode lead-out portion 213 may be an electrode terminal which is mounted on the end cap 2122 or the bottom wall 2121c in an insulated manner or the end cap 2122 which is connected to the shell 2121 in an insulated manner, and when the first electrode lead-out portion 211 is the end cap 2122 of the housing 212, the second electrode lead-out portion 213 may be an electrode terminal which is mounted on the end cap 2122 or the bottom wall 2121c in an insulated manner or the shell 2121 which is connected to the end cap 2122 in an insulated manner.

Optionally, in FIG. 4, FIG. 5, and FIG. 6, the first electrode lead-out portion 211 is a bottom wall 2121c of the shell 2121, and correspondingly, the second electrode lead-out portion 213 is an electrode terminal which is mounted on the bottom wall 2121c of the shell 2121 in an insulated manner. It should be noted that when the first electrode lead-out portion 211 is the bottom wall 2121c of the shell 2121, the first current collecting member 23 functions to electrically connect the first lug 221 and the bottom wall 2121c, and the first current collecting member 23 may be of a structure arranged between the first lug 221 and the bottom wall 2121c along the first direction X, such that the first current collecting member 23 is directly connected to the bottom wall 2121c, of course, the first current collecting member 23 may be of a structure arranged between the first lug 221 and the end cap 2122 along the first direction X, and in this case, the first current collecting member 23 may be connected to the end cap 2122 and then connected to the side wall 2121b of the shell 2121 through the end cap 2122 to achieve an electrical connection between the first current collecting member 23 and the bottom wall 2121c, and similarly, the first current collecting member 23 may also be directly connected to the side wall 2121b of the shell 2121 to achieve the electrical connection between the first current collecting member 23 and the bottom wall 2121c. Exemplarily, in FIG. 5 and FIG. 6, the first electrode lead-out portion 211 is the bottom wall 2121c of the shell 2121, the second electrode lead-out portion 213 is the electrode terminal which is mounted on the bottom wall 2121c of the shell 2121 in an insulated manner, the first current collecting member 23 is arranged between the end cap 2122 and the first lug 221 of the electrode assembly 22, the first current collecting member 23 connects the first lug 221 and the end cap 2122, the end cap 2122 is connected to a side wall 2121b of the shell 2121, and the side wall 2121b and the bottom wall 2121c (the first electrode lead-out portion 211) are an integrally formed structure, such that the first current collecting member 23 electrically connects the electrode assembly 22 and the first electrode lead-out portion 211.

The first current collecting member 23 functions to electrically connect the first lug 221 of the electrode assembly 22 to the first electrode lead-out portion 211, so as to input or output electric energy of the battery cell 20, such that the first current collecting member 23 can play a role of through connection between the electrode assembly 22 and the first electrode lead-out portion 211, which is beneficial to reducing the difficulty of the electrical connection between the electrode assembly 22 and the first electrode lead-out portion 211.

Exemplarily, the first current collecting member 23 may be made of various materials, for example, copper, iron, aluminum, steel, or an aluminum alloy, and the like.

The through hole 231 penetrates the first current collecting member 23 along the first direction X, that is, the through hole 231 extends along the first direction X, and the through hole 231 penetrates both sides of the first current collecting member 23 along the first direction X.

A first corner 232 is formed in an orthogonal projection of the hole wall surface of the through hole 231 along the first direction X, that is, the first corner 232 is formed at an edge of a projection formed by the through hole 231 along the first direction X, that is, a corner structure is formed on the hole wall surface of the through hole 231.

The portion of the orthogonal projection of the through hole 231 along the first direction X is located within the first corner 232, that is, the first corner 232 is a configuration projecting away from the through hole 231 toward the edge of the first current collecting member 23 such that the angle of the first corner 232 on the side facing the through hole 231 is greater than 0 degrees and less than 180 degrees, that is, the angle of the first corner 232 on the side facing the through hole 231 may be an acute angle, a right angle, or an obtuse angle such that the portion of the orthogonal projection of the through hole 231 along the first direction X is located within the first corner 232.

Optionally, there may be one or more through holes 231 formed in the first current collecting member 23, and exemplarily, in FIG. 7, one through hole 231 is formed in the first current collecting member 23. Similarly, there may be one or more first corners 232 formed on the hole wall surface of the through hole 231, and exemplarily, in FIG. 7, three first corners 232 are formed on the hole wall surface of the through hole 231, and the three first corners 232 are arranged along the circumferential direction of the through hole 231. Of course, in other embodiments, there may be two, four, five, or six first corners 232 formed on the hole wall surface of the through hole 231.

In some embodiments, referring to FIG. 4 and FIG. 5, the battery cell 20 may further include a second current collecting member 24 that electrically connects the second lug 222 of the electrode assembly 22 and the second electrode lead-out portion 213 to achieve an electrical connection between the electrode assembly 22 and the second electrode lead-out portion 213.

Exemplarily, the second current collecting member 24 is arranged between the bottom wall 2121c and the electrode assembly 22 along the first direction X, and the second current collecting member 24 connects the second lug 222 and the second electrode lead-out portion 213.

It should be noted that the structure and shape of the second current collecting member 24 may be the same as those of the first current collecting member 23, that is, the through hole 231 may be formed correspondingly in the second current collecting member 24.

Exemplarily, the first lug 221 is a negative electrode of the electrode assembly 22, the second lug 222 is a positive electrode of the electrode assembly 22, and correspondingly, the first electrode lead-out portion 211 is configured to output a negative electrode of the battery cell 20, and the second electrode lead-out portion 213 is configured to output a positive electrode of the battery cell 20.

The through hole 231 penetrating both sides of the first current collecting member 23 along the first direction X is formed in the first current collecting member 23, the first corner 232 is formed on the hole wall surface of the through hole 231 along the orthogonal projection along the first direction X, and the part of the through hole 231 along the orthogonal projection along the first direction X is located within the first corner 232, such that the first corner 232 formed on the hole wall surface of the through hole 231 is an outward protruding corner structure away from the through hole 231, the acting force acted on the first current collecting member 23 can concentrate stress at the first corner 232 on the hole wall surface of the through hole 231 when the battery cell 20 is in a thermal runaway and relieves an internal gas, and the first current collecting member 23 is torn from the first corner 232 on the hole wall surface of the through hole 231, such that an area of the region through which the thermal runaway gas passes can be increased to reduce blockage of the first current collecting member 23 on the thermal runaway gas inside the battery cell 20, to further effectively improve the exhaust smoothness and the exhaust efficiency of the battery cell 20, so as to reduce the risk such as fire and explosion due to a poor pressure relief effect of the battery cell 20, which is beneficial to improving the use reliability of the battery cell 20.

According to some embodiments of the present application, referring to FIG. 7, an angle β of the first corner 232 facing a side of the through hole 231 satisfies 0°<β≤90°. That is, a side of the first corner 232 facing the through hole 231 is an acute angle or a right angle.

The angle of the first corner 232 facing the side of the through hole 231 is set to be greater than 0 degrees and less than or equal to 90 degrees, such that a phenomenon in which it is difficult for the thermal runaway gas to tear the first current collecting member 23 from the first corner 232 due to an excessively large angle of the first corner 232 can be effectively alleviated while the first corner 232 is the corner structure protruding outward away from the through hole 231, which is further beneficial to improving the tearing effect of the thermal runaway gas on the first current collecting member 23 after stress concentration at the first corner 232.

In some embodiments, an angle β of the first corner 232 facing a side of the through hole 231 satisfies 30°≤β≤90°.

Exemplarily, the angle of the first corner 232 facing a side of the through hole 231 may be 30°, 32°, 35°, 38°, 40°, 45°, 50°, 55°, 60°, 65°, 70°, 72°, 75°, 80°, 85°, 90°, or the like.

By setting the angle of the first corner 232 facing a side of the through hole 231 to 30 to 90 degrees, it is possible to alleviate a phenomenon in which the processing difficulty of the through hole 231 becomes excessive due to an excessively small angle of the first corner 232, so as to reduce the manufacturing difficulty and the manufacturing cost of the first current collecting member 23.

According to some embodiments of the present application, as shown in FIG. 7, a plurality of first corners 232 are formed on the hole wall surface of the through hole 231, and the plurality of first corners 232 are sequentially arranged in a circumferential direction of the through hole 231.

The plurality of first corners 232 are sequentially arranged along the circumferential direction of the through hole 231, that is, the plurality of first corners 232 formed on the hole wall surface of the through hole 231 are sequentially arranged along a surrounding direction of the hole wall surface of the through hole 231.

It should be noted that the circumferential direction of the through hole 231 is the surrounding direction of the hole wall surface of the through hole 231.

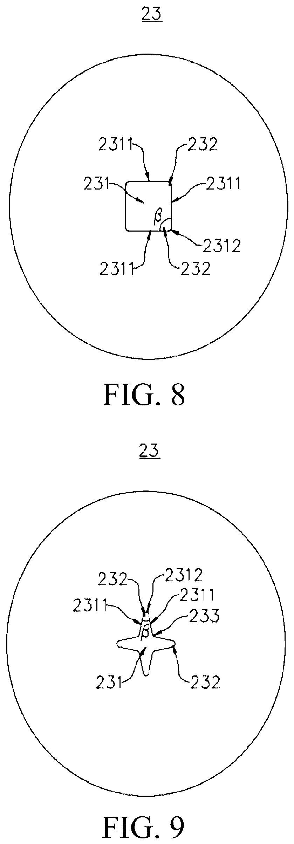

Exemplarily, in FIG. 7, three first bending corners 232 are formed on the hole wall surface of the through hole 231, and the three first bending corners 232 are sequentially arranged along the circumferential direction of the through hole 231. Of course, the first current collecting member 23 may also be of another structure, and referring to FIG. 8, FIG. 8 is a schematic structural diagram of the first current collecting member 23 according to yet some other embodiments of the present application. Four first corners 232 arranged along the circumferential direction of the through hole 231 are formed on the hole wall surface of the through hole 231. It should be noted that in other embodiments, there may also be five, six, seven, eight, or nine first corners 232 formed on the hole wall surface of the through hole 231.

The plurality of first corners 232 are formed on the hole wall surface of the through hole 231, and the plurality of first corners 232 are sequentially arranged along the circumferential direction of the through hole 231, such that the thermal runaway gas can tear the first current collecting member 23 from the plurality of first corners 232 after gas concentration at the plurality of first corners 232 on the hole wall surface of the through hole 231, and the first current collecting member 23 can be torn from a plurality of positions, which is beneficial to further expanding the area of the region of the first current collecting member 23 in which the thermal runaway gas passes, so as to further reduce blockage of the first current collecting member 23 on the thermal runaway gas inside the battery cell 20, thereby effectively improving the exhaust smoothness and the exhaust efficiency of the battery cell 20.

According to some embodiments of the present application, continuously referring to FIG. 7, the hole wall surface of the through hole 231 includes a plurality of first wall surfaces 2311 along the circumferential direction of the through hole 231, and the first corner 232 is formed between two adjacent first wall surfaces 2311.

The first corner 232 is formed between every two adjacent first wall surfaces 2311, that is, the angle between every two adjacent first wall surfaces is less than 180 degrees, that is, the cross section of the through hole 231 perpendicular to the first direction X is polygonal. Exemplarily, in FIG. 7, the cross section of the through hole 231 perpendicular to the first direction X is triangular, and in FIG. 8, the cross section of the through hole 231 perpendicular to the first direction X is rectangular. Of course, in other embodiments, the cross section of the through hole 231 perpendicular to the first direction X may also be pentagonal, hexagonal, heptagonal, or the like.

By arranging the hole wall surface of the through hole 231 as a plurality of first wall surfaces 2311 arranged along the circumferential direction of the through hole 231 and forming the first corner 232 between every two adjacent first wall surfaces 2311, the orthogonal projection of the through hole 231 in the first direction is of a polygonal structure, such that a plurality of first corners 232 arranged sequentially along the circumferential direction of the through hole 231 are formed on the hole wall surface of the through hole 231. The structure is simple and is conveniently implemented.

According to some embodiments of the present application, as shown in FIG. 7 and FIG. 8, the angles of the plurality of first corners 232 are all the same.

The angles of the plurality of first corners 232 are all the same, that is, the angles between two adjacent first wall surfaces 2311 of the plurality of first wall surfaces 2311 are all the same, that is, the cross section of the through hole 231 perpendicular to the first direction X is regular polygonal.

Exemplarily, in FIG. 7, the cross section of the through hole 231 perpendicular to the first direction X is equilateral triangular, and in FIG. 8, the cross section of the through hole 231 perpendicular to the first direction X is square. Of course, in other embodiments, the cross section of the through hole 231 perpendicular to the first direction X may also be regular pentagonal, regular hexagonal, regular heptagonal, regular octagonal, or the like.

The angles of the plurality of first corners 232 are set to be the same, such that included angles between two adjacent first wall surfaces 2311 of the plurality of first wall surfaces 2311 of the hole wall surface of the through hole 231 are all the same, and thus, the orthogonal projection of the through hole 231 in the first direction is of a regular polygonal structure. Therefore, on the one hand, it is convenient to manufacture and process the through hole 231, which is beneficial to reducing the manufacturing difficulty of the first current collecting member 23. On the other hand, the acting forces by which the first current collecting member 23 is torn from the plurality of first corners 232 are all the same, such that the thermal runaway gas tears the first current collecting member 23 from the plurality of first corners 232.

In some embodiments, referring to FIG. 7, the first current collecting member 23 is of a disk-like structure, and a central axis of the first current collecting member 23 coincides with a central axis of the through hole 231.

The first current collecting member 23 is of the disk-like structure, and a thickness direction of the first current collecting member 23 is the first direction X.

The central axis of the first current collecting member 23 coincides with the central axis of the through hole 231, that is, the center of the cross section of the through hole 231 perpendicular to the first direction X is located on the central axis of the first current collecting member 23.

The central axis of the first current collecting member 23 and the central axis of the through hole 231 are arranged to coincide with each other, such that the through hole 231 is located at the center position of the first current collecting member 23, and when the first current collecting member 23 is electrically connected to the electrode assembly 22 and the first electrode lead-out portion 211, the region of the first current collecting member 23 surrounding the outer side of the through hole 231 may be electrically connected to the electrode assembly 22 and the first electrode lead-out portion 211, and there is no need to secondarily position the first current collecting member 23 so as to avoid the through hole 231, thereby reducing the difficulty of assembling the first current collecting member 23 into the housing assembly 21 and improving the assembling efficiency of the battery cell 20.

According to some embodiments of the present application, as shown in FIG. 7 and FIG. 8, every two adjacent first wall surfaces 2311 are connected through a chamfered surface 2312 along the circumferential direction of the through hole 231.

Every two adjacent first wall surfaces 2311 are connected to each other by the chamfered surface 2312, that is, a connecting position between every two adjacent first wall surfaces 2311 is an arc transition structure, such that the chamfered surface 2312 is formed at the connecting position between every two adjacent first wall surfaces 2311.

The two adjacent first wall surfaces 2311 are connected through the chamfered surface 2312, which is beneficial to reducing the difficulty of forming the through hole 231 in the first current collecting member 23, and reducing the requirement on equipment for forming the through hole 231 in the first current collecting member 23.

According to some embodiments of the present application, as shown in FIG. 7 and FIG. 8, an orthogonal projection of the through hole 231 in the first direction X is polygonal.

The orthogonal projection of the through hole 231 in the first direction X is polygonal, that is, the cross section of the through hole 231 perpendicular to the first direction X is polygonal. Exemplarily, the orthogonal projection of the through hole 231 in the first direction X may be triangular, rectangular, pentagonal, hexagonal, heptagonal, or the like.

The orthogonal projection of the through hole 231 along the first direction X is of the polygonal structure, such that the first corner 232 is formed between every two adjacent edges in the polygon, and the plurality of first corners 232 sequentially arranged along the circumferential direction of the through hole 231 are formed on the hole wall surface of the through hole 231. The structure is simple and easy to implement.

In some embodiments, continuously referring to FIG. 7 and FIG. 8, the through hole 231 is regular polygonal in orthogonal projection along the first direction X.

The orthogonal projection of the through hole 231 along the first direction X is regular polygonal, that is, a plurality of internal angles of the cross section of the through hole 231 perpendicular to the first direction X are all equal.

Exemplarily, the orthogonal projection of the through hole 231 along the first direction X may be equilateral triangular, square, regular pentagonal, regular hexagonal, or the like.

The orthogonal projection of the through hole 231 along the first direction X is of the regular polygonal structure, such that the angles of the plurality of first corners 232 formed on the hole wall surface of the through hole 231 are all the same. On the one hand, it is convenient to manufacture and process the through hole 231, which is beneficial to reducing the manufacturing difficulty of the first current collecting member 23. On the other hand, the acting forces by which the first current collecting member 23 is torn from the plurality of first corners 232 are all the same, such that the thermal runaway gas tears the first current collecting member 23 from the plurality of first corners 232.

In some embodiments, continuously referring to FIG. 7 and FIG. 8, the orthogonal projection of the through hole 231 along the first direction X is triangular or rectangular.

In FIG. 7, the orthogonal projection of the through hole 231 along the first direction X is equilateral triangular. Of course, the shape of the through hole 231 is not limited to this, and in other embodiments, the orthogonal projection of the through hole 231 along the first direction X may also be isosceles triangular, right triangular, or the like.

In FIG. 8, the orthogonal projection of the through hole 231 along the first direction X is square. Of course, the shape of the through hole 231 is not limited to this, and in other embodiments, the orthogonal projection of the through hole 231 along the first direction X may also be rectangular.

The orthogonal projection of the through hole 231 along the first direction X is triangular or rectangular, such that the through hole 231 is the triangular hole or the rectangular hole. On the one hand, it is convenient to process the through hole 231 in the first current collecting member 23, which is beneficial to reducing the processing difficulty of the through hole 231. On the other hand, the size of the angle of the first corner 232 can be effectively controlled to alleviate a phenomenon that the angle of the first corner 232 is too large or too small.

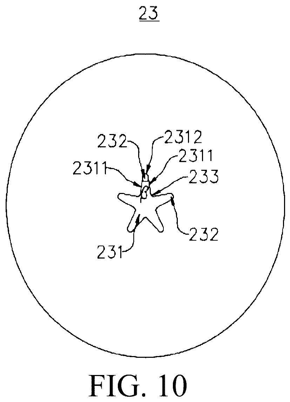

According to some embodiments of the present application, referring to FIG. 9 and FIG. 10, FIG. 9 is a schematic structural diagram of a current collecting member 23 according to yet some other embodiments, and FIG. 10 is a schematic structural diagram of a current collecting member 23 according to some other embodiments. The hole wall surface of the through hole 231 is formed with a plurality of corners, and along the circumferential direction of the through hole 231, the hole wall surface of the through hole 231 includes a plurality of first wall surfaces 2311, and a corner is formed between every two adjacent first wall surfaces 2311, the plurality of corners include a first corner fold 232 and a second corner 233, and an angle of the second corner 233 facing a side of the through hole 231 is greater than 180 degrees.

The corner is formed between every two adjacent first wall surfaces 2311, that is, every two adjacent first wall surfaces 2311 among the plurality of first wall surfaces 2311 of the hole wall surface of the through hole 231 are arranged at an included angle, such that a corner is formed between every two adjacent first wall surfaces 2311.

The plurality of corners include a first corner 232 and a second corner 233, and the angle of the second corner 233 facing a side of the through hole 231 is greater than 180 degrees, that is, among the plurality of corners formed on the hole wall surface of the through hole 231, a part of the corners is the first corner 232, that is, the angle of the part of the corner facing a side of the through hole 231 is smaller than 180 degrees, such that the part of the corner is an outward protruding corner structure away from the through hole 231 and another part of the corner is the second corner 233, that is, the angle of the part of the corner facing a side of the through hole 231 is greater than 180 degrees, such that the part of the corner is an inward protruding corner structure facing the through hole 231.

It should be noted that there may be one or more first corners 232 formed on the hole wall surface of the through hole 231, and similarly, there may be one or more second corners 233 formed on the hole wall surface of the through hole 231. Exemplarily, in FIG. 9, four first corners 232 and four second corners 233 are formed on the hole wall surface of the through hole 231, and the first corners 232 and the second corners 233 are alternately arranged along the circumferential direction of the through hole 231. In FIG. 10, five first corners 232 and five second corners 233 are formed on the hole wall surface of the through hole 231, and the first corners 232 and the second corners 233 are alternately arranged along the circumferential direction of the through hole 231. Of course, in other embodiments, the numbers of the first corners 232 and the second corners 233 may be other numbers, for example, there may be three, six, or seven the first corners 232 and the second corners 233, and similarly, the numbers of the first corners 232 and the second corners 233 may be unequal.

A second corner 233 is further formed on the hole wall surface of the through hole 231, and an angle of the second corner 233 facing a side of the through hole 231 is greater than 180 degrees, such that the second corner 233 is a corner structure protruding inward towards the through hole 231. The size of the angle of the first corner 232 can be adjusted through the second corner 233, such that the angle of the first corner 232 is reduced, and the thermal runaway gas easily tears the first current collecting member 23 from the first corner 232.

According to some embodiments of the present application, referring to FIG. 9 and FIG. 10, the plurality of corners includes a plurality of first corners 232 and a plurality of second corners 233, and the first corners 232 and the second corners 233 are alternately arranged along a circumferential direction of the through hole 231.

The first corners 232 and the second corners 233 are arranged alternately along the circumferential direction of the through hole 231, that is, one first corner 232 is arranged between every two adjacent second corners 233 along the circumferential direction of the through hole 231.

Exemplarily, in FIG. 9, four first corners 232 and four second corners 233 are formed on the hole wall surface of the through hole 231, and in FIG. 10, five first corners 232 and five second corners 233 are formed on the hole wall surface of the through hole 231.

The first corner 232 and the second corner 233 are arranged alternately along the circumferential direction of the through hole 231, such that a first corner 232 is formed between every two adjacent second corners 233, thereby facilitating adjustment of the size of the angle of the first corner 232 located between the two second corners 233 by the two adjacent second corners 233.

According to some embodiments of the present application, as shown in FIG. 9 and FIG. 10, the angles of the plurality of first corners 232 are all the same, and the angles of the plurality of second corners 233 are all the same.

The angles of the plurality of first corners 232 are all the same and the angles of the plurality of second corners 233 are all the same, and thus, the orthogonal projection of the through hole 231 along the first direction X is in a regular shape. Therefore, on the one hand, it is convenient to manufacture and process the through hole 231, which is beneficial to reducing the manufacturing difficulty of the first current collecting member 23. On the other hand, the acting forces by which the first current collecting member 23 is torn from the plurality of first corners 232 are all the same, such that the thermal runaway gas tears the first current collecting member 23 from the plurality of first corners 232.

In some embodiments, the first current collecting member 23 is of a disk-like structure, and a central axis of the first current collecting member 23 coincides with a central axis of the through hole 231.

The first current collecting member 23 is of the disk-like structure, and a thickness direction of the first current collecting member 23 is the first direction X.

The central axis of the first current collecting member 23 coincides with the central axis of the through hole 231, that is, the center of the cross section of the through hole 231 perpendicular to the first direction X is located on the central axis of the first current collecting member 23.

The central axis of the first current collecting member 23 and the central axis of the through hole 231 are arranged to coincide with each other, such that the through hole 231 is located at the center position of the first current collecting member 23, and when the first current collecting member 23 is electrically connected to the electrode assembly 22 and the first electrode lead-out portion 211, the region of the first current collecting member 23 surrounding the outer side of the through hole 231 may be electrically connected to the electrode assembly 22 and the first electrode lead-out portion 211, and there is no need to secondarily position the first current collecting member 23 so as to avoid the through hole 231, thereby reducing the difficulty of assembling the first current collecting member 23 into the housing assembly 21 and improving the assembling efficiency of the battery cell 20.

In some embodiments, every two adjacent first wall surfaces 2311 are connected by a chamfered surface 2312 along the circumferential direction of the through hole 231.

Every two adjacent first wall surfaces 2311 are connected to each other by the chamfered surface 2312, that is, a connecting position between every two adjacent first wall surfaces 2311 is an arc transition structure, such that the chamfered surface 2312 is formed at the connecting position between every two adjacent first wall surfaces 2311.

The two adjacent first wall surfaces 2311 are connected through the chamfered surface 2312, which is beneficial to reducing the difficulty of forming the through hole 231 in the first current collecting member 23, and reducing the requirement on equipment for forming the through hole 231 in the first current collecting member 23.

According to some embodiments of the present application, referring to FIG. 4, FIG. 5, and FIG. 6, the electrode assembly 22 has a central channel 223 extending along the first direction X, and at least a part of the central channel 223 along the orthogonal projection along the first direction X is located within the through hole 231.

The central through hole 231 penetrates both ends of the electrode assembly 22 along the first direction X. At least a part of the orthogonal projection of the central channel 223 along the first direction X is located within the through hole 231, that is, the orthogonal projection of the through hole 231 along the first direction X covers at least a part of the central through hole 231.

Exemplarily, in FIG. 5 and FIG. 6, the orthogonal projection of the through hole 231 along the first direction X is in a regular shape, and the central axis of the through hole 231 coincides with the central axis of the central through hole 231.

At least a part of the orthogonal projection of the central channel 223 of the electrode assembly 22 along the first direction X is located in the through hole 231 of the first current collecting member 23, such that the through hole 231 and the central channel 223 are structures overlapped along the first direction X, and thus, the thermal runaway gas generated in the central channel 223 of the electrode assembly 22 can directly act on the first corner 232 of the hole wall surface of the through hole 231, thereby more easily tearing the first current collecting member 23 from the first corner 232.

In some embodiments, referring to FIG. 3 and FIG. 4, the battery cell 20 is cylindrical, and the axial direction of the battery cell 20 is the same as the first direction X. That is, the battery cell 20 is of a cylindrical structure, and the central axis of the battery cell 20 extends along the first direction X.

The battery cell 20 is arranged as the cylindrical structure, such that the battery cell 20 has advantages such as a high capacity, a long cycle life, a wide use environment, and the like.

According to some embodiments of the present application, as shown in FIG. 3, FIG. 4, FIG. 5, and FIG. 6, the housing assembly 21 includes a shell 212, the electrode assembly 22 is accommodated in the housing 212, and a first electrode lead-out part 211 is formed on at least a part of the housing 212.

The housing 212 functions to accommodate the electrode assembly 22, at least a part of the housing 212 forms the first electrode lead-out portion 211, that is, a part of the housing 212 serves as the first electrode lead-out portion 211 to output or input electric energy of the battery cell 20, and the first electrode lead-out portion 211 may be the end cap 2122 of the housing 212 or the shell 2121 of the housing 212.

The housing assembly 21 is provided with a housing 212, and at least a part of the housing 212 is used as the first electrode lead-out portion 211, such that the electrode assembly 22 is connected to the housing 212 through the first current collecting member 23 to enable input and output of electric energy of the battery cell 20. The structure is simple and convenient to assemble.

According to some embodiments of the present application, as shown in FIG. 3, FIG. 4, FIG. 5, and FIG. 6, the housing 212 may include a shell 2121 and an end cap 2122. The shell 2121 includes a side wall 2121b and a bottom wall 2121c which are integrally formed, the side wall 2121b is arranged around the bottom wall 2121c, one end of the side wall 2121b is connected to the bottom wall 2121c, the other end of the side wall 2121b encloses an opening 2121a opposite to the bottom wall 2121c, the side wall 2121b and the bottom wall 2121c together define an accommodating chamber for accommodating the electrode assembly 22, and the end cap 2122 closes the opening 2121a. The bottom wall 2121c is the first electrode lead-out portion 211.

The shell 2121 includes a side wall 2121b and a bottom wall 2121c which are integrally formed, that is, the shell 2121 is manufactured by an integral molding process, for example, punching, casting, or extrusion molding, that is, the side wall 2121b and the bottom wall 2121c of the shell 2121 are of an integral structure.

The bottom wall 2121c is the first electrode lead-out portion 211, that is, the bottom wall 2121c of the shell 2121 of the housing 212 is configured to output or input electric energy of the battery cell 20. It should be noted that when the first electrode lead-out portion 211 is the bottom wall 2121c of the shell 2121, the second electrode lead-out portion 213 may be an electrode terminal which is mounted the bottom wall 2121c or the end cap 2122 in an insulated manner, or may be an end cap 2122 which is connected to the shell 2121 in an insulated manner, for example, in FIG. 4 and FIG. 5, the first electrode lead-out portion 211 is the bottom wall 2121c, and the second electrode lead-out portion 213 is an electrode terminal which is mounted on the bottom wall 2121c in an insulated manner.

The bottom wall 2121c of the shell 2121 is used as the first electrode lead-out portion 211 for outputting or inputting electric energy of the battery cell 20, such that the first electrode lead-out portion 211 can be separated from the end cap 2122, and thus, a phenomenon that a force generated when the first electrode lead-out portion 211 is pulled or twisted by a component such as a bus bar connected to the first electrode lead-out portion 211 acts between the end cap 2122 and the shell 2121 can be effectively alleviated to reduce the risk of a connection failure between the end cap 2122 and the shell 2121, which is further beneficial to reducing the risk of liquid leakage during the use of the battery cell 20.

According to some embodiments of the present application, in an embodiment in which the first electrode lead-out portion 211 is the bottom wall 2121c, as shown in FIG. 4, FIG. 5, and FIG. 6, the first current collecting member 23 is arranged between the end cap 2122 and the electrode assembly 22 along the first direction X. The first current collecting member 23 is connected to the end cap 2122, and the end cap 2122 is electrically connected to the side wall 2121b to electrically connect the first current collecting member 23 and the bottom wall 2121c.

The first current collecting member 23 and the second current collecting member 24 are located at both ends of the electrode assembly 22, respectively along the first direction X, the first current collecting member 23 is located between the end cap 2122 and the first lug 221, the second current collecting member 24 is located between the bottom wall 2121c and the second lug 222, and the second current collecting member 24 connects the second lug 222 and the second electrode lead-out portion 213.

The first current collecting member 23 is connected to the end cap 2122, the end cap 2122 is electrically connected to the side wall 2121b, that is, the first current collecting member 23 is directly connected to the end cap 2122, and the end cap 2122 is electrically connected to the side wall 2121b, such that the first current collecting member 23 is a structure which is indirectly electrically connected to the bottom wall 2121c through the end cap 2122 and the side wall 2121b sequentially.

Optionally, there may be various structures for connecting the first current collecting member 23 and the end cap 2122, for example, welding, clamping, or adhering, and the like.

In some embodiments, in FIG. 6, the end cap 2122 is provided with a protrusion 2122a on a side facing the electrode assembly 22 in a protruding manner, and the protrusion 2122a is in welding connection to the first current collecting member 23. Exemplarily, the protrusion 2122a is a structure in which the end cap 2122 is formed through a punching process to form the protrusion 2122a on a side of the end cap 2122 facing the electrode assembly 22. Of course, in other embodiments, the protrusion 2122a may also be formed by a process such as casting.

It should be noted that the structure of the battery cell 20 is not limited to this, and in a structure in which the first current collecting member 23 is arranged between the end cap 2122 and the first lug 221, the first current collecting member 23 may also be connected to the side wall 2121b to electrically connect the first current collecting member 23 and the bottom wall 2121c. That is, an outer peripheral surface of the first current collecting member 23 and an inner surface of the side wall 2121b are connected to each other to realize a structure which is indirectly electrically connected to the bottom wall 2121c through the side wall 2121b. In such an embodiment, the end cap 2122 and the side wall 2121b may be an electrically connected structure or an insulatively connected structure.

The first current collecting member 23 is arranged between the end cap 2122 and the electrode assembly 22 along the first direction X, and the first current collecting member 23 can be indirectly electrically connected to the shell 2121 through the end cap 2122 or the first current collecting member 23 can be directly connected to the side wall 2121b of the shell 2121, such that the first current collecting member 23 can be electrically connected to the bottom wall 2121c serving as the first electrode lead-out portion 211. The structure is simple and convenient to implement.

Of course, in the embodiment in which the bottom wall 2121c is the first electrode lead-out portion 211, the battery cell 20 may also be of another structure, for example, the first current collecting member 23 is arranged between the bottom wall 2121c and the electrode assembly 22 along the first direction X, and the first current collecting member 23 is connected to the bottom wall 2121c. That is, the first current collecting member 23 is located between the bottom wall 2121c and the first tab 221 of the electrode assembly 22 along the first direction X, such that the first current collecting member 23 can directly connect the bottom wall 2121c and the first lug 221, and correspondingly, the second current collecting member 24 may be arranged between the end cap 2122 and the second lug 222 of the electrode assembly 22, and in such an embodiment, the second electrode lead-out portion 213 may be an electrode terminal which is mounted on the end cap 2122 in an insulated manner or the end cap 2122 which is connected to the side wall 2121b of the shell 2121 in an insulated manner.

The first current collecting member 23 is arranged between the bottom wall 2121c and the electrode assembly 22 along the first direction X, such that the first current collecting member 23 can be directly connected to the bottom wall 2121c, so as to electrically connect the first current collecting member 23 to the bottom wall 2121c serving as the first electrode lead-out portion 211. The structure is simple and convenient to assemble.

According to some embodiments of the present application, the structure of the battery cell 20 is not limited to this, and the battery cell 20 may also be other structures, for example, the housing 212 may include a shell 2121 and an end cap 2122. An accommodating chamber having an opening 2121a is formed in the shell 2121 and the electrode assembly 22 is accommodated in the accommodating chamber. The end cap 2122 closes the opening 2121a, and the end cap 2122 is the first electrode lead-out portion 211.

The end cap 2122 is the first electrode lead-out portion 211, that is, the end cap 2122 of the housing 212 is configured to output or input electrical energy of the battery cell 20. It should be noted that when the first electrode lead-out portion 211 is the end cap 2122 of the housing 212, the second electrode lead-out portion 213 may be an electrode terminal which is mounted on the bottom wall 2121c or the end cap 2122 in an insulated manner, or may be the shell 2121 which is connected to the end cap 2122 in an insulated manner.

The end cap 2122 of the housing 212 is used as the first electrode lead-out portion 211 for outputting or inputting electric energy of the battery cell 20, it is beneficial to reducing the difficulty of assembly between the first current collecting member 23 and the first electrode lead-out portion 211 and between the first current collecting member 23 and the electrode assembly 22, such that the production efficiency of the battery cell 20 can be improved.

In the embodiment in which the first electrode lead-out portion 211 is the end cap 2122, the first current collecting member 23 is arranged between the end cap 2122 and the electrode assembly 22 along the first direction X, and the first current collecting member 23 is connected to the end cap 2122. That is, the first current collecting member 23 is located between the end cap 2122 and the first lug 221 of the electrode assembly 22 along the first direction X, such that the first current collecting member 23 can directly connect the end cap 2122 and the first lug 221 of the electrode assembly 22. Correspondingly, the second current collecting member 24 is located between the bottom wall 2121c and the second lug 222 of the electrode assembly 22 along the first direction X, and in such an embodiment, the second electrode lead-out portion 213 may be an electrode terminal which is mounted on the bottom wall 2121c of the shell 2121 in an insulated manner, or the shell 2121 which is connected to the end cap 2122 in an insulated manner.

The first current collecting member 23 is arranged between the end cap 2122 and the electrode assembly 22 along the first direction X, such that the first current collecting member 23 can be directly connected to the end cap 2122, so as to electrically connect the first current collecting member 23 to the end cap 2122 serving as the first electrode lead-out portion 211. The structure is simple and convenient to assemble.

According to some embodiments of the present application, the battery cell 20 may also be other structures, for example, the housing assembly 21 further includes a housing 212, and the electrode assembly 22 is accommodated in the housing 212. The first electrode lead-out portion 211 is mounted on the housing 212 in an insulated manner, and at least a part of the first current collecting member 23 is arranged between the first electrode lead-out portion 211 and the electrode assembly 22 along the first direction X, and the first current collecting member 23 is connected to the first electrode lead-out portion 211.

The first electrode lead-out portion 211 is mounted on the housing 212 in an insulated manner, that is, the first electrode lead-out portion 211 is an electrode terminal which is mounted on the housing 212 in an insulated manner, and the first electrode lead-out portion 211 may be mounted on the end cap 2122 of the housing 212 in an insulated manner or may be mounted on the bottom wall 2121c of the shell 2121 in an insulated manner.

The housing assembly 21 is further provided with a housing 212, and the first electrode lead-out portion 211 is mounted on the housing 212 in an insulated manner, such that the first electrode lead-out portion 211 can realize input or output of electric energy of the battery cell 20. The battery cell 20 having such a structure can reduce the risk of a short circuit between the first electrode lead-out portion 211 and the housing 212 to improve the use reliability of the battery cell 20.

In the embodiment in which the first electrode lead-out part 211 is the electrode terminal which is mounted on the housing 212 in an insulated manner, the housing 212 may include a shell 2121 and an end cap 2122. The shell 2121 includes a side wall 2121b and a bottom wall 2121c which are integrally formed, the side wall 2121b is arranged around the bottom wall 2121c, one end of the side wall 2121b is connected to the bottom wall 2121c, the other end of the side wall 2121b encloses an opening 2121a opposite to the bottom wall 2121c, the side wall 2121b and the bottom wall 2121c together define an accommodating chamber for accommodating the electrode assembly 22, the end cap 2122 closes the opening 2121a, and the first electrode lead-out portion 211 is mounted on the end cap 2122 in an insulated manner.

The shell 2121 includes a side wall 2121b and a bottom wall 2121c which are integrally formed, that is, the shell 2121 is manufactured by an integral molding process, for example, punching, casting, or extrusion molding, that is, the side wall 2121b and the bottom wall 2121c of the shell 2121 are of an integral structure.

The first electrode lead-out portion 211 is mounted on the end cap 2122 in an insulated manner, that is, the first electrode lead-out portion 211 is an electrode terminal which is mounted on the end cap 2122 in an insulated manner, and correspondingly, the first current collecting member 23 is located between the end cap 2122 and the first lug 221 of the electrode assembly 22 along the first direction X, and in such an embodiment, the second electrode lead-out portion 213 may be the bottom wall 2121c of the shell 2121, that is, the second current collecting member 24 is located between the bottom wall 2121c and the second lug 222 of the electrode assembly 22 along the first direction X, and the second current collecting member 24 directly connects the bottom wall 2121c and the second lug 222 of the electrode assembly 22. Of course, the second electrode lead-out portion 213 may also be the end cap 2122 of the housing 212, that is, the second current collecting member 24 is located between the bottom wall 2121c and the second lug 222 of the electrode assembly 22 along the first direction X, and the second current collecting member 24 may be connected to the bottom wall 2121c or the side wall 2121b to achieve an indirect electrical connection between the second current collecting member 24 and the end cap 2122.

Of course, in some embodiments, the first electrode lead-out portion 211 may be mounted on the bottom wall 2121c in an insulated manner. That is, the first electrode lead-out portion 211 is an electrode terminal which is mounted on the bottom wall 2121c in an insulated manner, and correspondingly, the first current collecting member 23 is located between the bottom wall 2121c and the first lug 221 of the electrode assembly 22 along the first direction X, and in such an embodiment, the second electrode lead-out portion 213 may be the end cap 2122 of the shell 2121, that is, the second current collecting member 24 is located between the end cap 2122 and the second lug 222 of the electrode assembly 22 along the first direction X, and the second current collecting member 24 is directly connected to the end cap 2122 and the second lug 222 of the electrode assembly 22. Of course, the second electrode lead-out portion 213 may also be the bottom wall 2121c of the shell 2121, that is, the second current collecting member 24 is located between the end cap 2122 and the second lug 222 of the electrode assembly 22 along the first direction X, and the second current collecting member 24 may be connected to the end cap 2122 or connected to the side wall 2121b to achieve an indirect electrical connection between the second current collecting member 24 and the bottom wall 2121c.

The first electrode lead-out portion 211 is mounted on the end cap 2122 in an insulated manner, such that the first electrode lead-out portion 211 can realize output or input of electric energy of the battery cell 20. By using the battery cell 20 having such a structure, the first electrode lead-out portion 211 can be easily mounted on the housing 212 in an insulated manner, which is beneficial to reducing the difficulty of assembly between the first electrode lead-out portion 211 and the housing 212, thereby improving the production efficiency of the battery cell 20. Similarly, the first electrode lead-out portion 211 is mounted on the bottom wall 2121c of the shell 2121 in an insulated manner, such that the first electrode lead-out portion 211 can output or input the electric energy of the battery cell 20. By using the battery cell 20 having such a structure, the first electrode lead-out portion 211 is away from the end cap 2122, such that a phenomenon that a force generated when the bottom wall 2121c is pulled or twisted by the first electrode lead-out portion 211 acts on the end cap 2122 can be alleviated to reduce the risk of a connection failure between the end cap 2122 and the shell 2121, which is further beneficial to reducing the risk of liquid leakage during the use of the battery cell 20.

According to some embodiments of the present application, referring to FIG. 4, FIG. 5 and FIG. 6, the battery cell 20 may further include a pressure relief mechanism 25. The pressure relief mechanism 25 is arranged on the housing 212, the pressure relief mechanism 25 is configured to relieve the internal pressure of the battery cell 20, and the pressure relief mechanism 25 is arranged opposite to the through hole 231 along the first direction X.

The pressure relief mechanism 25 is arranged opposite to the through hole 231 along the first direction X, that is, the pressure relief mechanism 25 and the first current collecting member 23 are both located at the same end of the electrode assembly 22 along the first direction X. For example, if the first current collecting member 23 is located between the end cap 2122 and the electrode assembly 22 along the first direction X, the pressure relief mechanism 25 is arranged on the end cap 2122; and if the first current collecting member 23 is located between the bottom wall 2121c of the shell 2121 and the electrode assembly 22 along the first direction X, the pressure relief mechanism 25 is arranged on the bottom wall 2121c. Exemplarily, in FIG. 5 and FIG. 6, the first current collecting member 23 is arranged between the end cap 2122 and the electrode assembly 22 along the first direction X, and correspondingly, the pressure relief mechanism 25 is arranged on the end cap 2122.

Optionally, the pressure relief mechanism 25 and the end cap 2122 may be an integrally formed structure, or may be a separately arranged structure. Exemplarily, in FIG. 6, the pressure relief mechanism 25 and the end cap 2122 are the integrally formed structure, and the pressure relief mechanism 25 is a region where an indented groove is formed on the end cap 2122. Of course, in other embodiments, the pressure relief mechanism 25 and the end cap 2122 may also be a separate structure, the pressure relief mechanism 25 may be connected to the end cap 2122 by way of welding or the like, and correspondingly, the pressure relief mechanism 25 may be a pressure relief component such as an explosion-proof valve, an explosion-proof plate, an air valve, a pressure relief valve, or a safety valve.

The pressure relief mechanism 25 is arranged in the housing 212, and the pressure relief mechanism 25 and the through hole 231 are structures arranged opposite to each other along the first direction X. On the one hand, the internal pressure of the battery cell 20 can be relieved by the pressure relief mechanism 25 to reduce the risk of fire and explosion of the battery cell 20, and on the other hand, the thermal runaway gas can be directly discharged from the pressure relief mechanism 25 after the first current collecting member 23 is torn from the first corner 232 by the thermal runaway gas, which can further reduce the phenomenon that the first current collecting member 23 prevents the thermal runaway gas from being discharged from the inside of the battery cell 20 by arranging the pressure relief mechanism 25.

According to some embodiments of the present application, the present application further provides a battery 100, where the battery 100 includes the battery cell 20 in any one of the above solutions.

In some embodiments, referring to FIG. 2, the battery 100 may further include a case 10, where the case 10 is configured to accommodate the battery cell 20.

Here, the case 10 is configured to provide an accommodating space for the battery cell 20, and the case 10 may have various structures. Exemplarily, the case 10 may include a first case body 11 and a second case body 12, the first sub-box 11 and the second case body 12 cover each other, and the first case body 11 and the second case body 12 together define a accommodating space for accommodating the battery cell 20.

Optionally, the second case body 12 may be of a hollow structure with an opening in one end, the first case body 11 may be of a plate-shaped structure, and the first case body 11 covers an opening side of the second case body 12, such that the first case body 11 and the second case body 12 together define the accommodating space. The first case body 11 and the second case body 12 each may be of a hollow structure with an opening in one end, and an opening side of the first case body 11 covers the opening side of the second case body 12.

Of course, the case 10 formed by the first case body 11 and the second case body 12 may be in various shapes such as a cylinder, a cube, a rectangular cuboid, and the like. Exemplarily, in FIG. 2, the shape of the case 10 is a rectangular cuboid.

Optionally, there may be one or more battery cells 20 accommodated in the case 10. Exemplarily, in FIG. 2, the battery 100 may include a plurality of battery cells 20. The plurality of battery cells 20 may be subjected to series connection, parallel connection, or series-parallel connection. The series-parallel connection means that the plurality of battery cells 20 are subjected to both series connection and parallel connection. The plurality of battery cells 20 may be subjected to series connection, parallel connection, or series-parallel connection directly, and then an integration formed by the plurality of battery cells 20 is accommodated in the box 10. Certainly, the battery 100 may be alternatively a battery module formed by integrating the plurality of battery cells 20 by series connection, parallel connection, or series-parallel connection, and then a plurality of battery modules are integrated by series connection, parallel connection, or series-parallel connection, and accommodated in the box 10.

In some embodiments, the battery 100 may further include other structures. For example, the battery 100 may further include a current converging component, configured to connect a plurality of battery cells 20, so as to implement an electrical connection among the plurality of battery cells 20.

According to some embodiments of the present application, the present application further provides an electric device, including the battery cell 20 in any one of the above solutions, and the battery cell 20 is configured to provide electric energy to the electric device.

The electric device may be any one of the above devices or systems using the battery cell 20.

It should be noted that when the battery cell 20 is mounted on the electric device, the battery cell 20 may be directly mounted on the electric device, or the battery cell 20 may be mounted in the case 10 and then mounted on the electric device through the case 10, for example, the electric device is exemplified by the vehicle 1000, the battery cell 20 may be first mounted in the case 10 to form the battery 100, and then the battery 100 may be mounted on the vehicle 1000, or the battery cell 20 may be directly mounted on the vehicle 1000, that is, the case 10 may be a part of the electric device. The electric device is exemplified by the vehicle 1000, the case 10 may serve as a part of a chassis structure of the vehicle 1000, for example, a part of the case 10 may become at least a part of a floor of the vehicle 1000, or a part of the case 10 may become at least a part of a cross beam or a longitudinal beam of the vehicle 1000. Similarly, there may be one or more battery cells 20 arranged on the electric device, and the plurality of battery cells 20 may be subjected to series connection or parallel connection or series-parallel connection.

According to some embodiments of the present application, referring to FIGS. 3 to 8, the present application further provides a battery cell 20, and the battery cell 20 includes a housing assembly 21, an electrode assembly 22, a first current collecting member 23, and a pressure relief mechanism 25. The housing assembly 21 includes a housing 212 and a first electrode lead-out portion 211 for inputting or outputting electric energy, the housing 212 is cylindrical, the electrode assembly 22 is accommodated in the housing 212, the housing 212 includes a shell 2121 and an end cap 2122, the shell 2121 includes a side wall 2121b and a bottom wall 2121c which are integrally formed, the side wall 2121b is arranged around the bottom wall 2121c, one end of the side wall 2121b is connected to the bottom wall 2121c, the other end of the side wall 2121b defines an opening 2121a opposite to the bottom wall 2121c, the side wall 2121b and the bottom wall 2121c together define an accommodating chamber for accommodating the electrode assembly 22, the end cap 2122 closes the opening 2121a, the end cap 2122 is electrically connected to the side wall 2121b, and the bottom wall 2121c is the first electrode lead-out portion 211. The first current collecting member 23 is arranged between the end cap 2122 and the electrode assembly 22 along the first direction X, a first lug 221 is formed at an end of the electrode assembly 22 facing the first current collecting member 23, the first current collecting member 23 connects the first lug 221 and the end cap 2122, a protrusion 2122a is arranged on a side of the end cap 2122 facing the first current collecting member 23 in a protruding manner, and the protrusion 2122a is in welding connection to the first current collecting member 23. The pressure relief mechanism 25 is arranged on the end cap 2122, and the pressure relief mechanism 25 is configured to relieve the internal pressure of the battery cell 20.

The first current collecting member 23 is provided with a through hole 231, the through hole 231 penetrates the first current collecting member 23 along the first direction X, a plurality of first corners 232 are formed on a hole wall surface of the through hole 231 along an orthogonal projection along the first direction X, and an angle β of the first corners 232 facing a side of the through hole 231 satisfies 30° ≦ β ≦ 90°. The plurality of first corners 232 are sequentially arranged in a circumferential direction of the through hole 231, and the angles of the plurality of first corners 232 are all the same. The hole wall surface of the through hole 231 includes a plurality of first wall surfaces 2311 along the circumferential direction of the through hole 231, a first corner 232 is formed between every adjacent two first wall surfaces 2311, and every two adjacent first wall surfaces 2311 are connected by a chamfered surface 2312. The first current collecting member 23 is of a disk-like structure, and a central axis of the first current collecting member 23 coincides with a central axis of the through hole 231. In FIG. 7, the orthogonal projection of the through hole 231 along the first direction X is equilateral triangular. In FIG. 8, the orthogonal projection of the through hole 231 along the first direction X is square.

According to some embodiments of this application, referring to FIGS. 3 to 5 and FIGS. 9 to 10, the present application further provides a battery cell 20, and the battery cell 20 includes a housing assembly 21, an electrode assembly 22, a first current collecting member 23, and a pressure relief mechanism 25. The housing assembly 21 includes a housing 212 and a first electrode lead-out portion 211 for inputting or outputting electric energy, the housing 212 is cylindrical, the electrode assembly 22 is accommodated in the housing 212, the housing 212 includes a shell 2121 and an end cap 2122, the shell 2121 includes a side wall 2121b and a bottom wall 2121c which are integrally formed, the side wall 2121b is arranged around the bottom wall 2121c, one end of the side wall 2121b is connected to the bottom wall 2121c, the other end of the side wall 2121b defines an opening 2121a opposite to the bottom wall 2121c, the side wall 2121b and the bottom wall 2121c together define an accommodating chamber for accommodating the electrode assembly 22, the end cap 2122 closes the opening 2121a, the end cap 2122 is electrically connected to the side wall 2121b, and the bottom wall 2121c is the first electrode lead-out portion 211. The first current collecting member 23 is arranged between the end cap 2122 and the electrode assembly 22 along the first direction X, a first lug 221 is formed at an end of the electrode assembly 22 facing the first current collecting member 23, the first current collecting member 23 connects the first lug 221 and the end cap 2122, a protrusion 2122a is arranged on a side of the end cap 2122 facing the first current collecting member 23 in a protruding manner, and the protrusion 2122a is in welding connection to the first current collecting member 23. The pressure relief mechanism 25 is arranged on the end cap 2122, and the pressure relief mechanism 25 is configured to relieve the internal pressure of the battery cell 20.

The first current collecting member 23 is provided with a through hole 231, the through hole 231 penetrates the first current collecting member 23 along the first direction X, a plurality of corners are formed on a hole wall surface of the through hole 231 along an orthogonal projection along the first direction X, the hole wall surface of the through hole 231 includes a plurality of first wall surfaces 2311 along the circumferential direction of the through hole 231, a corner is formed between every two adjacent first wall surfaces 2311, and the plurality of corners include a plurality of first corners 232 and a plurality of second corners 233. An angle β of a side of the first corner 232 facing the through hole 231 satisfies 30° ≦ β ≦ 90°, and an angle of the second corner 233 facing the through hole 231 is greater than 180°. The first corners 232 and the second corners 233 are alternately arranged along the circumferential direction of the through hole 231, the angles of the first corners 232 are all the same, the angles of the second corners 233 are all the same, and each adjacent two of the first wall surfaces 2311 are connected by a chamfered surface 2312. The first current collecting member 23 is of a disk-like structure, and a central axis of the first current collecting member 23 coincides with a central axis of the through hole 231.

It should be noted that, without contradictory, the embodiments in the present application and features in the embodiments may be combined one another.

The foregoing descriptions are merely preferred embodiments of the present application, and are not intended to limit the present application. For those skilled in the art, various modifications and changes may be made in the present application. Any modification, equivalent replacement, or improvement made without departing from the spirit and principle of the present application shall fall within the protection scope of the present application.

## Claims

1. A battery cell, comprising:
a housing assembly, comprising a first electrode lead-out portion for inputting or outputting electric energy;
an electrode assembly, accommodated in the housing assembly; and
a first current collecting member, accommodated in the housing assembly, the first current collecting member being located at one end of the electrode assembly along a first direction and the first current collecting member electrically connecting the first electrode lead-out portion and the electrode assembly,
wherein the first current collecting member is provided with a through hole that penetrates the first current collecting member along the first direction, a first corner is formed on a hole wall surface of the through hole along an orthogonal projection along the first direction, and a part of the through hole along the orthogonal projection along the first direction is located within the first corner.

2. The battery cell according to claim 1, wherein an angle β of the first corner facing a side of the through hole satisfies 0°<β≤90°.

3. The battery cell according to claim 2, wherein 30°≤β≤90°.

4. The battery cell according to any one of claims 1 to 3, wherein a plurality of first corners are formed on the hole wall surface of the through hole, and the plurality of first corners are sequentially arranged along a circumferential direction of the through hole.

5. The battery cell according to claim 4, wherein the hole wall surface of the through hole comprises a plurality of first wall surfaces along the circumferential direction of the through hole, and the first corner is formed between every two adjacent first wall surfaces.

6. The battery cell according to claim 5, wherein the plurality of first corners have the same angle.

7. The battery cell according to claim 6, wherein the first current collecting member is of a disk-like structure, and a central axis of the first current collecting member coincides with a central axis of the through hole.

8. The battery cell according to claim 5 or 6, wherein every two adjacent first wall surfaces are connected through a chamfered surface along the circumferential direction of the through hole.

9. The battery cell according to any one of claims 4 to 8, wherein the orthogonal projection of the through hole along the first direction is polygonal.

10. The battery cell according to claim 9, wherein the orthogonal projection of the through hole along the first direction is regular polygonal.

11. The battery cell according to claim 9 or 10, wherein the orthogonal projection of the through hole along the first direction is triangular or rectangular.

12. The battery cell according to any one of claims 1 to 3, wherein the plurality of corners are formed on the hole wall surface of the through hole, the hole wall surface of the through hole comprises a plurality of first wall surfaces along the circumferential direction of the through hole, the corner is formed between every adjacent two first wall surfaces, the plurality of corners comprise the first corner and a second corner, and the angle of the second corner facing the side of the through hole is greater than 180°.

13. The battery cell according to claim 12, wherein the plurality of corners comprise a plurality of first corners and a plurality of second corners, and the first corners and the second corners are alternately arranged along the circumferential direction of the through hole.

14. The battery cell according to claim 13, wherein angles of the plurality of first corners are all the same, and angles of the plurality of second corners are all the same.

15. The battery cell according to claim 14, wherein the first current collecting member is of a disk-like structure, and a central axis of the first current collecting member coincides with a central axis of the through hole.

16. The battery cell according to any one of claims 12 to 14, wherein every two adjacent first wall surfaces are connected through a chamfered surface along the circumferential direction of the through hole.

17. The battery cell according to any one of claims 1 to 16, wherein the electrode assembly has a central channel extending along the first direction, and at least a part of the central channel along the orthogonal projection along the first direction is located within the through hole.

18. The battery cell according to any one of claims 1 to 17, wherein the battery cell is cylindrical, and an axial direction of the battery cell is the same as the first direction.

19. The battery cell according to any one of claims 1 to 18, wherein the housing assembly comprises a housing, the electrode assembly is accommodated in the housing, and at least a part of the housing forms the first electrode lead-out portion.

20. The battery cell according to claim 19, wherein the housing comprises:
a shell, comprising a side wall and a bottom wall which are integrally molded, wherein the side wall is arranged around the bottom wall, one end of the side wall is connected to the bottom wall, the other end of the side wall forms an opening opposite to the bottom wall through surrounding, and the side wall and the bottom wall together define an accommodating chamber for accommodating the electrode assembly; and
an end cap, closing the opening,
wherein the bottom wall is the first electrode lead-out portion.

21. The battery cell according to claim 20, wherein the first current collecting member is arranged between the end cap and the electrode assembly along the first direction,
wherein the first current collecting member is connected to the end cap, and the end cap is electrically connected to the side wall to electrically connect the first current collecting member and the bottom wall; or
the first current collecting member is connected to the side wall to electrically connect the first current collecting member and the bottom wall.

22. The battery cell according to claim 20, wherein the first current collecting member is arranged between the bottom wall and the electrode assembly along the first direction, and the first current collecting member is connected to the bottom wall.

23. The battery cell according to claim 19, wherein the housing comprises:
a shell, wherein an accommodating chamber having an opening is formed in the shell and the electrode assembly is accommodated in the accommodating chamber; and
an end cap, closing the opening,
wherein the end cap is the first electrode lead-out portion.

24. The battery cell according to claim 23, wherein the first current collecting member is arranged between the end cap and the electrode assembly along the first direction, and the first current collecting member is connected to the end cap.

25. The battery cell according to any one of claims 1 to 18, wherein the housing assembly further comprises a housing, the electrode assembly being accommodated in the housing,
wherein the first electrode lead-out portion is mounted on the housing in an insulated manner, and at least a part of the first current collecting member is arranged between the first electrode lead-out portion and the electrode assembly along the first direction, and the first current collecting member is connected to the first electrode lead-out portion.

26. The battery cell according to claim 25, wherein the housing comprises:
a shell, comprising a side wall and a bottom wall which are integrally molded, wherein the side wall is arranged around the bottom wall, one end of the side wall is connected to the bottom wall, the other end of the side wall forms an opening opposite to the bottom wall through surrounding, and the side wall and the bottom wall together define an accommodating chamber for accommodating the electrode assembly; and
an end cap, closing the opening,
wherein the first electrode lead-out portion is mounted on the end cap in an insulated manner; or
the first electrode lead-out portion is mounted on the bottom wall in an insulated manner.

27. The battery cell according to any one of claims 19 to 26, further comprising:
a pressure relief mechanism, arranged on the housing, and configured to relieve an internal pressure of the battery cell,
wherein the pressure relief mechanism is arranged opposite to the through hole along the first direction.

28. A battery, comprising the battery cell according to any one of claims 1 to 27.

29. An electric device, comprising the battery cell according to any one of claims 1 to 27, wherein the battery cell is configured to provide electric energy.
